# EUROPÄISCHE PATENTSCHRIFT

(11) **EP 3 239 075 B1**
(45) Veröffentlichungstag und Bekanntmachung des Hinweises auf die Patenterteilung: **06.03.2019**
(21) Anmeldenummer: 17165758.8
(22) Anmeldetag: 10.04.2017
(51) Int. Cl.: B65G 21/20, B65G 47/68

(54) **TRANSPORTVORRICHTUNG FÜR ARTIKELSTRÖME AUS JEWEILS GEORDNET NACHEINANDER TRANSPORTIERTEN ARTIKELN UND VERFAHREN ZUR ANPASSUNG EINER TRANSPORTVORRICHTUNG AN VERSCHIEDEN BREITE ARTIKEL**
TRANSPORT DEVICE FOR ARTICLE FLOWS ORDERLY FROM SUCCESSIVELY TRANSPORTED ARTICLES AND METHOD FOR ADAPTING A TRANSPORT DEVICE TO DIFFERENT WIDTH ARTICLES
DISPOSITIF DE TRANSPORT POUR FLUX D'ARTICLES TRANSPORTÉS LES UNS DERRIÈRE LES AUTRES ET PROCÉDÉ D'ADAPTATION D'UN DISPOSITIF DE TRANSPORT À DIFFÉRENTS ARTICLES LARGES

(30) Priorität: 25.04.2016 DE 102016206984
(43) Veröffentlichungstag der Anmeldung: 01.11.2017
(73) Patentinhaber: Krones Aktiengesellschaft, 93073 Neutraubling (DE)
(72) Erfinder: DOCKHORN, Daniel, 93073 Neutraubling (DE)
(74) Vertreter: Benninger, Johannes

(56) Entgegenhaltungen:
- EP-A1- 1 247 769
- DE-C2- 3 336 988
- US-A1- 2013 199 897

## Beschreibung

Die vorliegende Erfindung betrifft eine Transportvorrichtung nach dem Oberbegriff des Anspruchs 1 und ein Verfahren zur Anpassung einer Transportvorrichtung an verschieden breite Artikel nach dem Oberbegriff des Anspruchs 16.

In der Automatisierungstechnik, wo mit einer Vielzahl beispielsweise gleichartiger Artikel umgegangen werden muss, wie etwa in der Automatisierungstechnik für die Lebensmittel- und Getränkeindustrie und/oder in der Verpackungstechnik und in der Verpackungsindustrie, ist es üblich, für immer wiederkehrende Vorgänge eigens hierfür konstruierte Vorrichtungen zum Umgang mit Artikeln vorzusehen.

Bei den Artikeln kann es sich beispielsweise um Objekte, wie etwa verpackte oder unverpackte Gegenstände oder Behälter, oder um Gebinde aus mehreren Objekten handeln, wobei die Objekte eines Gebindes beispielsweise vermittels einer Umreifung, einer Umverpackung, wie etwa einer Umwickelung, einem Schrumpfschlauch oder eines Kartons oder eines Tragegestells zusammengehalten werden, um nur einige denkbare Ausgestaltungen zu nennen.

Vorteilhaft werden Artikel in einem Artikelstrom aus jeweils geordnet nacheinander beispielsweise ununterbrochenen unmittelbar aufeinander folgend transportierten Artikeln einem vorzunehmenden Umgang zugeführt oder von einem vorgenommenen Umgang abtransportiert.

Um innerhalb möglichst kurzer Zeit mit möglichst vielen Artikeln umzugehen ist bekannt, die Artikel in mehreren durch seitliche Begrenzungen in ihrer Weite an die Breite der Artikel angepassten, parallel verlaufenden Gassen geführten Artikelströmen zu transportieren.

Durch DE 33 36 988 C2 ist eine Transportvorrichtung mit mehreren parallel verlaufenden Gassen bekannt. Jede Gasse verfügt über eine durch ein eigenes Förderband gebildete Transportspur. Die beiden äußeren Gassen sind nach außen hin durch zwei an gegenüberliegenden Längsseiten gestellfest angeordnete, äußere Führungsgeländer begrenzt. Kurz als Gassenbleche bezeichnete, innere Führungsgeländer begrenzen die Gassen nach innen, zur Mitte der Transportvorrichtung hin. Die Gassen links der Mitte sind dadurch links außen durch das äußere Führungsgeländer und zur Mitte hin durch jeweils einseitig rechts deren Transportspuren angeordnete Gassenbleche voneinander abgegrenzt. Die Gassen rechts der Mitte sind demgegenüber rechts außen durch das äußere Führungsgeländer und zur Mitte hin durch jeweils einseitig links deren Transportspuren angeordnete Gassenbleche voneinander abgegrenzt. Hierdurch ergibt sich in der Mitte ein mit abnehmender Breite der Artikel immer größer werdender, ungenutzter Bereich, da die beiden über die Mitte hinweg benachbarten innersten Gassen jeweils zur Mitte hin durch ein eigenes Gassenblech begrenzt sind. Die Förderbänder sind über die Breite der Transportvorrichtung zwischen den äußeren Führungsgeländern hinweg unabhängig voneinander frei verschiebbar angeordnet. Die Gassenbleche können einseitig an den Förderbändern befestigt sein. In diesem Fall werden die Förderbänder zur Anpassung der Transportvorrichtung von einem Transport von Artikeln einer bestimmten Breite, beispielsweise eines bestimmten Durchmessers, an den Transport von Artikeln einer anderen Breite gemeinsam mit den einseitig an diesen befestigten Gassenblechen manuell verschoben und in ihrer Verschiebelage gestellfest fixiert werden. Der Abstand von der Mitte eines Förderbands zum diesem zugeordneten Gassenblech ist dabei immer gleichbleibend. Dabei verlaufen dann die Mittellinien aller transportierter Artikel nicht genau entlang der Mitte des jeweiligen Förderbands. Alternativ können die Gassenbleche von zwischen den Förderbändern einklemmbaren Distanzelementen getragen sein. Hierzu sind die unabhängig voneinander frei verschiebbaren Förderbänder zwischen mit unverdrehbar auf einem Gewindeabschnitt mit Rechtsgewinde und einem Gewindeabschnitt mit Linksgewinde einer Gewindespindel laufenden Muttern verbundenen Fingern angeordnet. Entlang der Transportvorrichtung sind mehrere solche Gewindespindeln mit gegenläufigen Gewindeabschnitten vorgesehen, durch deren Betätigung die Förderbänder gegeneinander geschoben werden können, um die Distanzelemente zwischen ihnen einzuklemmen. Beim Öffnen der Klemmung fallen diese nach unten heraus. Das Einführen von Distanzelementen anderer Breite ist dadurch besonders erschwert, da zwischen den Fingern alles frei verschiebbar ist, einhergehend mit den Nachteilen langer Stillstandzeiten für die Umrüstung von einer Breite von Artikeln auf eine andere Breite von Artikeln sowie einer großen benötigten Anzahl verschieden breiter Distanzelemente.

Durch DE 202 08 127 U1 ist eine Transportvorrichtung mit einem über deren Gesamtbreite durchgängigen Förderband und mehreren parallel verlaufenden Gassen bekannt. Das Förderband ist vermittels von oberhalb gehaltener Gassenbleche in mehrere jeweils eine Transportspur einer Gasse bildende Förderbandpartien unterteilt. Ein mittleres Gassenblech ist unverrückbar an quer zu den Transportspuren oberhalb des Förderbands verlaufenden Traversen befestigt. Die verbleibenden Gassenbleche sind quer zu den Transportspuren entlang der Traversen verschiebbar angeordnet. Die Gassenbleche sind durch ein Gestänge miteinander gekoppelt. Das Gestänge besteht aus mehreren untereinander gekoppelten Kniehebel- oder Scherenmechanismen, je einem an jeder Traverse. Ein solcher Kniehebel- oder Scherenmechanismus besteht aus einem um eine vertikale Steuerhebelachse schwenkbar oberhalb des mittleren Gassenblechs angeordneten Steuerhebel mit zwei gegenüberliegenden Hebelarmen. An dem Steuerhebel sind eine der Anzahl der auf beiden Seiten des mittleren Gassenblechs verbleibenden Gassenbleche entsprechende Zahl von jeweils mit einem verbleibenden Gassenblech gelenkig verbunden Lenkerarmen um jeweils eigene, parallel zur Steuerhebelachse verlaufende Lenkerachsen schwenkbar angeordnet. Jeder Lenkerarm ist dabei mit genau einem verbleibenden Gassenblech und einem der Hebelarme gelenkig verbunden. Die mit den verbleibenden Gassenblechen auf der einen Seite des mittleren Gassenblechs gelenkig verbundenen Lenkerarme sind dabei mit dem einen Hebelarm, die mit den verbleibenden Gassenblechen auf der anderen Seite des mittleren Gassenblechs gelenkig verbundenen Lenkerarme mit dem gegenüberliegenden Hebelarm des Steuerhebels gelenkig verbunden. Dabei sind die parallel verlaufenden Lenkerachsen um so weiter von der Steuerhebelachse entfernt am jeweiligen Hebelarm vorgesehen, je mehr verbleibende Gassenbleche sich zwischen einem mit einem einer Lenkerachse zugeordneten Lenkerarm gelenkig verbundenen verbleibenden Gassenblech und dem mittleren Gassenblech befinden. Je nach Richtung bewirkt ein Verschwenken des Steuerhebels eine Verschiebung der Gassenbleche entlang der Traversen zur Mitte hin oder von der Mitte weg nach außen. Das von innen nach außen durch zunehmende Abstände der Lenkerachsen zur Steuerhebelachse zunehmende Übersetzungsverhältnis erlaubt mit einer Drehung des Steuerhebels eine gleichzeitige Anpassung aller Gassen der Transportvorrichtung von einem Transport von Artikeln einer bestimmten Breite, beispielsweise eines bestimmten Durchmessers, an den Transport von Artikeln einer anderen Breite. Die an mehreren entlang der Transportvorrichtung vorgesehenen Traversen angeordneten Kniehebel- oder Scherenmechanismen sind untereinander mit einer oder mehreren Koppelstangen verbunden. Diese sind um parallel zu den Steuerhebel- und Lenkerachsen verlaufenden Koppelachsen schwenkbar an beispielsweise um 90° gegenüber den Steuerhebeln verdreht angeordneten Koppelarmen gelenkig angeordnet sein. Ein Verschwenken eines Steuerhebels hat damit die gleichzeitige Verstellung aller Kniehebel- oder Scherenmechanismen zur Folge.

Nachteilig hieran ist eine begrenzte Anpassbarkeit an überbreite Artikel sowie aufgrund der von oberhalb gehaltenen Gassenbleche eine unüberwindbare Einschränkung der Höhe der Artikel. Darüber hinaus stellt das alle Transportspuren bildende Förderband ein erhöhtes Verletzungsrisiko bei der Bedienung der Transportvorrichtung und ein hohes Kostenrisiko bezüglich Wartung und Austausch dar. Das Förderband kann außerdem bei ungleichmäßiger Belastung über dessen Breite hinweg, beispielsweise bei in den Gassen stattfindendem Transport von voneinander beabstandeten Artikelgruppen Wellen schlagen, einhergehend mit umstürzenden Artikel und dadurch bedingten Stillstandzeiten.

Durch EP 2 159 173 B1 ist eine Transportvorrichtung mit mehreren parallel verlaufenden Gassenpaaren bekannt. Jedes Gassenpaar verfügt über zwei durch jeweils ein eigenes Förderband gebildete Transportspuren. Die Gassenpaare sind durch quer zur Transportvorrichtung gemeinsam mit jeweils einem ersten der beiden Förderbänder eines Gassenpaars verstellbar angeordnete Gassenbleche voneinander abgegrenzt. Zwischen den Förderbändern eines jeden Gassenpaars kann ein Unterteilungsblech parallel zu den Gassenblechen verlaufend und gemeinsam mit jeweils einem zweiten der beiden Förderbänder eines Gassenpaars ebenfalls quer zur Transportvorrichtung verstellbar angeordnet werden. Hierdurch kann ein Gassenpaar in zwei gleich oder unterschiedlich breite Einzelgassen unterteilt werden. Darüber hinaus ist es durch Entfernung des Unterteilungsblechs möglich, ein oder alle Gassenpaare an den Transport überbreiter Artikel anzupassen. In diesem Fall stützen beide Förderbänder eines Gassenpaars überbreite Artikel ab. Die Verstellung der Gassenbleche und der Unterteilungsbleche quer zur Transportvorrichtung erfolgt vermittels einer Vielzahl von Gewindespindeln, vorzugsweise jeweils mit gegenläufigen Gewindeabschnitten. Mittels einer ersten Gewindespindel wird die Breite eines Gassenpaars, mittels einer zweiten Gewindespindel die Breite dessen Einzelgassen eingestellt.

Nachteilig hieran ist die Vielzahl benötigter Gewindespindeln einhergehend mit einem hohen konstruktiven und - Materialaufwand. Darüber hinaus weist die gemeinsame Verstellung der Förderbänder mit den Gassen- und Unterteilungsblechen den Nachteil auf, dass dabei dann die Mittellinien aller transportierter Artikel nicht genau entlang der Mitte des jeweiligen Förderbands verlaufen.

Durch EP 1 247 769 A1 ist eine weitere Transportvorrichtung nach dem Oberbegriff des Anspruchs 1, mit mehreren parallel verlaufenden Gassen offenbart, wobei jeder Gasse eine Transportspur zum Befördern von Artikeln oder dergleichen zugeordnet ist. Die Gassen werden jeweils durch Gassenbleche gebildet. Die Gassenbleche sind jeweils unterhalb den Transportspuren und quer zur Transportrichtung mit einer Welle verbunden. Während das mittlere Gassenblech ortsfest an der Welle fixiert ist, sind die anderen Gassenbleche entlang der Welle verschiebbar, so dass sich die Abstände zwischen den Gassenblechen einstellen lassen.

Eine Aufgabe der Erfindung ist es, eine Transportvorrichtung zu schaffen, die unter Erhalt einer hohen Betriebssicherheit eine schnelle und exakte Anpassung an Artikel verschiedener Breite erlaubt. Darüber hinaus ist eine Aufgabe der Erfindung, ein Verfahren anzugeben, welches eine schnelle und exakte Anpassung einer Transportvorrichtung an Artikel verschiedener Breite ermöglicht.

Die Aufgabe wird jeweils gelöst mit den Merkmalen der unabhängigen Ansprüche. Weitere vorteilhafte Ausgestaltungen werden durch die Unteransprüche beschrieben.

Ein erster Gegenstand der Erfindung betrifft demnach eine Transportvorrichtung mit einem Gestell und einem oder mehreren parallel verlaufenden Gassenpaaren. Jedes Gassenpaar verfügt über zwei jeweils durch eine eigene Transporteinrichtung gebildete Transportspuren zur Abstützung und zum Transport mindestens eines Artikelstroms aus geordnet nacheinander transportierten Artikeln in einer Transportrichtung.

Die Gassenpaare sind durch zwischen ihnen angeordnete, innere Gassenbleche voneinander abgegrenzt. Die jeweils äußeren Gassenpaare sind nach außen hin durch jeweils ein äußeres Gassenblech begrenzt. Die Zahl der Gassenbleche ist damit um eins höher als die Anzahl der Gassenpaare.

Zwischen den beiden Transporteinrichtungen jeden Gassenpaars ist jeweils ein Transportspurenpaarträger angeordnet. Die Transportspurenpaarträger erstrecken sich in Längsrichtung parallel zur Transportrichtung. Vorzugsweise erstrecken sich die Transportspurenpaarträger über die gesamte Länge der Transportvorrichtung. Damit ist zwischen zwei benachbarten Gassenblechen immer ein Transportspurenpaarträger angeordnet.

Die Gassenbleche und die Transportspurenpaarträger sind - gegebenenfalls bis auf einen mittleren Transportspurenpaarträger bei einer ungeraden Anzahl von Gassenpaaren, beziehungsweise gegebenenfalls bis auf ein mittleres Gassenblech bei einer geraden Anzahl von Gassenpaaren - quer zur Transportrichtung frei verschiebbar an dem Gestell angeordnet. Näheres zu dieser Einschränkung ist in der Beschreibung zu den Ausführungsbeispielen erläutert.

An jedem Transportspurenpaarträger ist ein Unterteilungsblech lösbar anordbar beziehungsweise angeordnet. Ist ein Unterteilungsblech an einem Transportspurenpaarträger montiert, unterteilt dieses das betroffene Gassenpaar in zwei Einzelgassen mit jeweils einer durch eine eigene Transporteinrichtung gebildeten Transportspur. Sind alle Unterteilungsbleche montiert ergibt sich insgesamt eine gerade Anzahl von Einzelgassen.

An jedem Transportspurenpaarträger ist mindestens eine hohlzylinderförmige Gewindespindelhülse mit einer inneren Mantelfläche und mit einer äußeren Mantelfläche um ihre quer zur Transportrichtung verlaufende Zylinderachse drehbar gelagert angeordnet. Eine an einem Transportspurenpaarträger drehbar gelagert angeordnete Gewindespindelhülse ist relativ zu diesem längs ihrer Zylinderachse unverschiebbar angeordnet. In einem Querschnitt normal zur Zylinderachse gesehen weicht die Geometrie der inneren Mantelfläche von der Kreisform ab. Die Geometrie der inneren Mantelfläche kann in jedem Querschnitt entlang der Zylinderachse identisch sein. Die innere Mantelfläche definiert damit eine durchgängige, zentrale Öffnung beispielsweise konstanten, von der Kreisform abweichenden Innenquerschnitts der Gewindespindelhülse.

Die äußere Mantelfläche ist mit gegenläufigen Gewindeabschnitten versehen. Entlang der Zylinderachse gesehen ist hiermit zum einen Ende der Gewindespindelhülse hin ein Gewindeabschnitt mit einem Außengewinde mit Rechtsgewinde, und zum gegenüberliegenden, anderen Ende hin ein Gewindeabschnitt mit einem Außengewinde mit Linksgewinde ausgebildet.

Um um ihre Zylinderachse drehbar, jedoch längs ihrer Zylinderachse gegenüber einem Transportspurenpaarträger festgelegt zu sein, kann an der äußeren Mantelfläche der Gewindespindelhülse zwischen den Gewindeabschnitten mindestens ein Einstich vorgesehen sein, beispielsweise für einen Spreng- oder Sicherungsring, wie etwa einen Seegerring, dessen Anordnung beispielsweise beidseitig eines Lagers die Gewindespindelhülse drehbar, jedoch axial unverrückbar gegenüber dem Transportspurenpaarträger festlegt. Alternativ kann eine zur Anordnung beispielsweise zwischen zwei Lagern vorgesehene Partie mit größerem Außendurchmesser als die beiden Gewindeabschnitte vorgesehen sein. Auch eine zwei- oder mehrteilige Ausgestaltung der Gewindespindelhülse beispielsweise mit einer mittigen Flanschverbindung ist denkbar.

Auf den gegenläufigen Gewindeabschnitten ist beidseitig jeden Transportspurenpaarträgers jeweils eine Transporteinrichtung gegenüber diesem quer zur Transportrichtung verstellbar angeordnet. Jede Transporteinrichtung weist hierzu je entlang der Erstreckung des ihr zugeordneten Transportspurenpaarträgers vorgesehener und an diesem drehbar gelagerter Gewindespindelhülse ein mit deren Rechtsbeziehungsweise Linksgewinde korrespondierendes Innengewinde auf, je nachdem auf welcher Seite des Transportspurenpaarträgers die Transporteinrichtung vorgesehen ist.

Eine Drehung einer Gewindespindelhülse in einer Drehrichtung verlegt dadurch die beidseitig des Transportspurenpaarträgers angeordneten Transporteinrichtungen gleichzeitig zum Transportspurenpaarträger hin, wohingegen eine Drehung in umgekehrter Drehrichtung beide Transporteinrichtungen weg vom Transportspurenpaarträger verlagert.

An dem Gestell ist mindestens eine Spindelwelle um eine quer zur Transportrichtung verlaufende, zumindest mit einem Teil der Zylinderachsen der Gewindespindelhülsen übereinstimmende Spindelachse drehbar gelagert angeordnet. Die Spindelwelle weist einen mit der Geometrie der inneren Mantelfläche korrespondierenden Außenquerschnitt auf. Die Spindelwelle führt durch die zentrale Öffnung aller mit ihren Zylinderachsen auf ihrer Spindelachse liegenden Gewindespindelhülsen hindurch. Durch die korrespondierende Geometrie des Außenquerschnitts der Spindelwelle und des Innenquerschnitts der Gewindespindelhülse sind die Gewindespindelhülsen entlang der Spindelachse verschiebbar, jedoch um die Spindelachse unverdrehbar auf der Spindelwelle angeordnet.

Mehrere entlang der Transportvorrichtung angeordnete Spindelwellen können mittels eines Getriebes, beispielsweise mittels eines Zugmittelgetriebes, miteinander wirkverbunden sein.

Die eine oder mehreren Spindelwellen und die mit den Innengewinden der Transporteinrichtungen zusammenwirkenden Gewindespindelhülsen bilden einen Spindeltrieb.

An dem Gestell ist darüber hinaus mindestens ein mit den Gassenblechen und den zwischen diesen angeordneten Transportspurenpaarträgern zusammenwirkender Scherenmechanismus angeordnet. Das Zusammenwirken zwischen dem Scherenmechanismus und den Gassenblechen und den zwischen diesen angeordneten Transportspurenpaarträgern sieht eine Beeinflussung der Verschiebelage der Gassenbleche und der zwischen diesen angeordneten Transportspurenpaarträgern quer zur Transportrichtung in Bezug auf eine Steuerhebelachse vor. Jeder Scherenmechanismus umfasst einen um eine vorzugsweise vertikale und/oder bevorzugt normal auf einer von der Transportrichtung und der mindestens einen Spindelachse aufgespannten Ebene aufstehende, gestellfeste Steuerhebelachse schwenkbar angeordneten Steuerhebel. Die Gassenbleche und die Transportspurenpaarträger sind mit dem Steuerhebel mit zunehmendem Übersetzungsverhältnis entsprechend deren zunehmendem Abstand von der Steuerhebelachse gekoppelt.

Der Steuerhebel kann zwei gegenüberliegende Hebelarme aufweisen, je einen für die auf jeweils einer Seite des Steuerhebels quer zur Transportrichtung gesehen angeordneten Gassenbleche und Transportspurenpaarträger.

Mehrere entlang der Transportvorrichtung angeordnete Scherenmechanismen können mittels eines Gestänges oder eines Getriebes, insbesondere mittels eines Zugmittelgetriebes, miteinander wirkverbunden sein.

Der oder die Scherenmechanismen und der Spindeltrieb bilden den Verstellmechanismus zur Anpassung der Transportvorrichtung von einem Transport von Artikeln einer bestimmten Breite, beispielsweise eines bestimmten Durchmessers, an den Transport von Artikeln einer anderen Breite.

Bevorzugt ist der gesamte Verstellmechanismus aus Scherenmechanismus und Spindeltrieb unterhalb einer durch die Transportspuren gebildeten oder von diesen eingenommenen Transportebene angeordnet. Dadurch besteht keinerlei Beschränkung hinsichtlich der Höhe der transportierbaren Artikel.

Um die Transportvorrichtung von einem Transport von Artikeln einer bestimmten Breite an den Transport von Artikeln einer anderen Breite anzupassen werden zunächst die Breiten der Einzelgassen durch Verschwenken eines mit gegebenenfalls mehreren entlang der Transportvorrichtung angeordneten Scherenmechanismen gekoppelten Steherhebels eingestellt. Anschließend können zunächst durch Betätigung des Spindeltriebs alle Transportspuren gleichzeitig mittig der Einzelgassen eingestellt werden, bevor für einen gegebenenfalls vorgesehenen Transport überbreiter Artikel auf beiden Transportspuren eines Gassenpaars die Unterteilungsbleche entfernt werden. Das Entfernen der Unterteilungsbleche und die Betätigung des Spindeltriebs können gegebenenfalls in umgekehrter Reihenfolge vorgenommen werden.

Zur Anpassung von einer großen Breite an eine hiervon stark abweichende kleine Breite kann es erforderlich sein, die Schritte Einstellung der Breiten der Einzelgassen und Einstellung der Lage der Transportspuren in den Einzelgassen ein oder mehrmals zu wiederholen, gegebenenfalls auch deren Reihenfolge zu vertauschen, da es hierbei sein kann, dass die Transportspuren während der Verkleinerung der Breite der Gassen mit den Gassenblechen kollidieren. Vorteilhaft kann dies umgangen werden, indem zunächst die Transportspuren der Gassenpaare ganz eng zusammengefahren werden, so dass dann die Breiten der Einzelgassen in einem Schritt so klein wie nötig eingestellt werden können. Sind die Transportspuren dann zu eng eingestellt, können diese in einem abschließenden Schritte wieder alle zugleich mittig der Einzelgassen eingestellt werden.

Der Vollständigkeit halber sei erwähnt, dass sich die Gassen- und gegebenenfalls montierten Unterteilungsbleche längs der Transportrichtung erstrecken.

Wichtig ist hervorzuheben, dass die Begriffe Gassenblech und Unterteilungsblech stellvertretend für jedwede Ausgestaltung einer Begrenzung und/oder Trennung benachbarter Einzelgassen und/oder Gassenpaare steht, wie etwa von Führungsgeländern sowie von Einrichtungen mit Gassenblechträger und lösbar an diesem angeordnetem Gassenblech.

Ebenfalls wichtig ist hervorzuheben, dass die Erfindung auch durch ein zuvor in Verbindung mit einer Anpassung der erfindungsgemäßen Transportvorrichtung von einem Transport von Artikeln einer bestimmten Breite an den Transport von Artikeln einer anderen Breite beschriebenes Verfahren zur Einrichtung und zum Betrieb einer Transportvorrichtung verwirklicht sein kann.

Ein zweiter Gegenstand der Erfindung betrifft demnach ein Verfahren zur Anpassung einer Transportvorrichtung mit mindestens zwei durch zwischen ihnen angeordnete, innere Gassenbleche voneinander abgegrenzte, jeweils durch ein Unterteilungsblech in zwei Einzelgassen unterteilbare Gassenpaare an verschieden breite Artikel, insbesondere von der Breite zuvor transportierter Artikel an die Breite nachfolgend zu transportierender Artikel.

Die jeweils äußeren Gassenpaare sind nach außen hin durch jeweils ein äußeres Gassenblech begrenzt. Die Zahl der Gassenbleche ist damit um eins höher als die Anzahl der Gassenpaare. Zwischen benachbarten Gassenpaaren befindet sich immer nur ein Gassenblech.

Jedes Gassenpaar verfügt über zwei jeweils durch eine eigene Transporteinrichtung gebildete Transportspuren zur Abstützung und zum Transport mindestens eines Artikelstroms aus geordnet nacheinander transportierten Artikeln in einer Transportrichtung. Das ein Gassenpaar in zwei Einzelgassen unterteilende Unterteilungsblech ist zwischen den beiden jeweils durch eine eigene Transporteinrichtung gebildeten Transportspuren des Gassenpaars angeordnet beziehungsweise anordbar. Jede durch eine eigene Transporteinrichtung gebildete Transportspur ist damit bei montierten Unterteilungsblechen einer Einzelgasse zugeordnet beziehungsweise bei entfernten Unterteilungsblechen einem Gassenpaar zugeordnet und einer Einzelgasse durch Montage eines Unterteilungsblechs zuordbar.

Jedes Gassenpaar ist damit bei entferntem Unterteilungsblech zum Transport eines Artikelstroms aus geordnet nacheinander transportierten Artikeln oder bei montiertem Unterteilungsblech zum Transport von zwei Artikelströmen aus jeweils geordnet nacheinander transportierten Artikeln in einer Transportrichtung vorgesehen.

Die Transporteinrichtungen der Transportspuren eines Gassenpaars sind gleichzeitig gegenläufig abstandsveränderlich an einem mittig des Gassenpaars vorgesehenen Transportspurenpaarträger angeordnet, an dem auch ein das Gassenpaar in Einzelgassen unterteilendes Unterteilungsblech lösbar angeordnet beziehungsweise lösbar anordbar ist.

Das Verfahren sieht vor, zunächst die Breite sämtlicher Einzelgassen oder Gassenpaare gleichzeitig einzustellen. Dabei sind die Gassenpaare abhängig von der Breite zuvor transportierter Artikel bei montierten Unterteilungsblechen jeweils in zwei Einzelgassen unterteilt oder bei entfernten Unterteilungsblechen jeweils in zwei Einzelgassen unterteilbar.

Da die die Transportspuren bildenden Transporteinrichtungen jeweils paarweise an einem immer mittig innerhalb eines jeden Gassenpaars geführten Transportspurenpaarträger angeordnet sind, werden die Transporteinrichtungen bei der Einstellung der Breite der Einzelgassen oder Gassenpaare bereits mit verstellt und müssen nur noch mittig in den Einzelgassen des ihrem Transportspurenpaarträger zugeordneten Gassenpaars eingestellt beziehungsweise feinjustiert werden.

Demnach sieht das Verfahren anschließend eine Einstellung beziehungsweise Feinjustierung Transporteinrichtungen quer zur Transportrichtung auf die Mitten der Einzelgassen vor. Hierzu sieht das Verfahren vor, die jeweils paarweise gegenläufig quer zur Transportrichtung abstandsveränderlich an den Transportspurenpaarträgern angeordneten Transporteinrichtungen gemeinsam quer zur Transportrichtung zu verstellen, bis diese sich alle gleichzeitig in den Mitten ihrer jeweiligen Einzelgassen einfinden.

Schließlich kann das Verfahren vorsehen, die Unterteilungsbleche zu entfernen oder zu montieren oder entfernt oder montiert zu belassen, je nachdem, ob die nachfolgend zu transportierenden Artikel so breit sind, dass sie zu deren sicherem Transport auf zwei Transporteinrichtungen transportiert werden müssen, oder ob sie schmal genug sind, um in einer Einzelgasse transportiert zu werden.

Ebenso wie die Transportvorrichtung kann das Verfahren alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Darüber hinaus kann die Transportvorrichtung einzelne oder Kombinationen von voranstehend oder nachfolgend in Verbindung mit dem Verfahren beschriebene Merkmale oder solche Merkmale verwirklichende Einrichtungen aufweisen, ebenso wie das Verfahren einzelne oder Kombinationen von voranstehend oder nachfolgend in Verbindung mit der Transportvorrichtung beschriebene Merkmale oder solche Merkmale verwirklichende Verfahrensschritte aufweisen kann.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: ein der Verdeutlichung des Aufbaus und des Funktionsprinzip dienendes erstes Ausführungsbeispiel einer Transportvorrichtung mit einem Scherenmechanismus für die Einstellung der Breite der Einzelgassen und mit einer Spindeltrieb für die Einstellung der Transportspuren beispielsweise auf die Mitten der Einzelgassen in einer Ansicht von unterhalb der Transportspuren.
- Fig. 2: ein zweites Ausführungsbeispiel einer Transportvorrichtung mit einem Scherenmechanismus für die Einstellung der Breite der Einzelgassen und mit einer Spindeltrieb für die Einstellung der Transportspuren beispielsweise auf die Mitten der Einzelgassen in einer Ansicht von unterhalb der Transportspuren.
- Fig. 3: eine der Einstellung der Transportspuren beispielsweise auf die Mitten der Einzelgassen beitragende Gewindespindelhülse in einer Draufsicht.
- Fig. 4: eine an einem Transportspurenpaarträger um ihre Zylinderachse drehbar, jedoch längs ihrer Zylinderachse unverrückbar angeordnete Gewindespindelhülse in einer Draufsicht.
- Fig. 5: ein Ablaufdiagramm eines Verfahrens zur Anpassung einer Transportvorrichtung an verschieden breite Artikel.

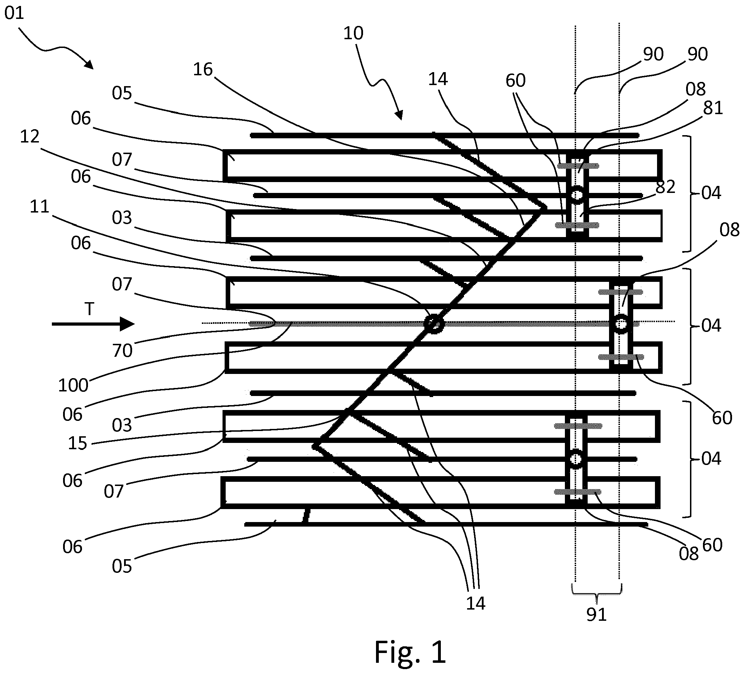

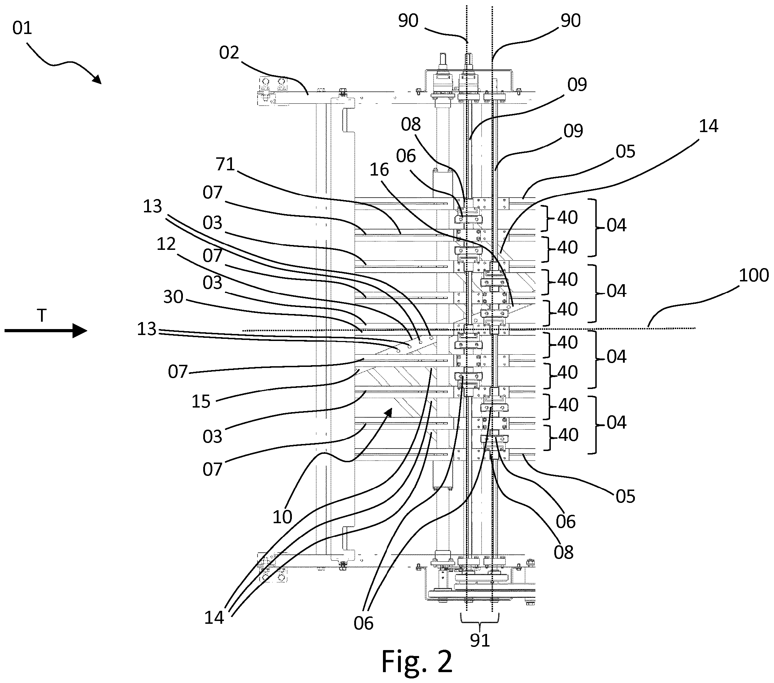

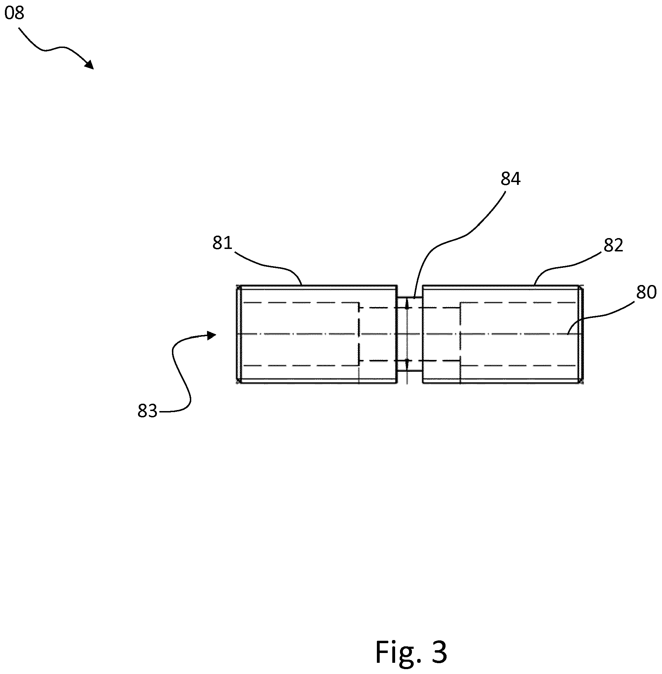

Eine in Fig. 1, Fig. 2, Fig. 3, Fig. 4 ganz oder in Teilen dargestellte Transportvorrichtung 01 umfasst ein Gestell 02 und ein oder mehrere, durch zwischen ihnen parallel zu einer in Fig. 1 und Fig. 2 durch einen Pfeil T angedeuteten Transportrichtung verlaufend angeordnete, innere Gassenbleche 03 voneinander abgegrenzten Gassenpaare 04.

Die äußeren Gassenpaare 04 sind nach außen hin durch jeweils ein äußeres Gassenblech 05 begrenzt.

Die Zahl der Summe der inneren Gassenbleche 03 und der äußeren Gassenbleche 05 ist damit um eins höher als die Anzahl der Gassenpaare 04.

Jedes Gassenpaar 04 weist zwei jeweils durch eine eigene Transporteinrichtung 06 gebildete Transportspuren zur Abstützung und zum Transport mindestens eines Artikelstroms aus geordnet nacheinander transportierten Artikeln in der Transportrichtung auf.

Zwischen den beiden Transporteinrichtungen 06 jeden Gassenpaars 04 und damit zwischen je zwei benachbarten inneren Gassenblechen 03 beziehungsweise zwischen einem äußeren Gassenblech 05 und einem benachbarten inneren Gassenblech 03 ist jeweils ein Transportspurenpaarträger 07 angeordnet.

Die Transportspurenpaarträger 07 erstrecken sich in Längsrichtung parallel zur Transportrichtung. Vorzugsweise erstrecken sich die Transportspurenpaarträger 07 über die gesamte Länge der Transportvorrichtung 01.

Die Gassenbleche 03, 05 und die Transportspurenpaarträger 07 sind - gegebenenfalls bis auf einen mittleren Transportspurenpaarträger 70 bei einer ungeraden Anzahl von Gassenpaaren 04 (Fig. 1), beziehungsweise gegebenenfalls bis auf ein mittleres Gassenblech 30 bei einer geraden Anzahl von Gassenpaaren 04 (Fig. 2) - quer zur Transportrichtung frei verschiebbar an dem Gestell 02 angeordnet.

An jedem Transportspurenpaarträger 07 ist mindestens eine hohlzylinderförmige Gewindespindelhülse 08 mit gegenläufigen Außengewindeabschnitten 81, 82, einer durchgängigen, zentralen Öffnung 83 und einer quer zur Transportrichtung verlaufenden Zylinderachse 80 längs ihrer Zylinderachse 80 unverschiebbar und um ihre quer zur Transportrichtung verlaufende Zylinderachse 80 drehbar gelagert angeordnet.

Wichtig ist in diesem Zusammenhang hervorzuheben, dass im vorliegenden Dokument der Begriff Achse im Gegensatz zu dem Begriff Welle eine geometrische Achse und nicht ein Maschinenelement bezeichnet.

Um die Gewindespindelhülse 08 gegenüber einem Transportspurenpaarträger 07 um ihre Zylinderachse 80 drehbar anzuordnen und zugleich gegenüber dem Transportspurenpaarträger 07 längs ihrer Zylinderachse 80 unverrückbar festzulegen, kann außen an der Gewindespindelhülse zwischen deren gegenläufigen Außengewindeabschnitten 81, 82 mindestens ein Einstich 84 vorgesehen sein, beispielsweise für einen Spreng- oder Sicherungsring, wie etwa einen Seegerring. Die Anordnung jeweils eines Spreng- oder Sicherungsring beispielsweise beidseitig eines Lagers legt die Gewindespindelhülse 08 drehbar, jedoch axial in Richtung ihrer Zylinderachse 80 unverrückbar gegenüber dem Transportspurenpaarträger 07 fest. Alternativ kann ein an einem Lagerdeckel 72 vorgesehener Fortsatz in den eine umlaufende Nut bildenden Einstich 84 eingreifen und so die Gewindespindelhülse 08 drehbar, jedoch axial in Richtung ihrer Zylinderachse 80 unverrückbar gegenüber dem Transportspurenpaarträger 07 festzulegen. Alternativ kann eine zur Anordnung beispielsweise zwischen zwei Lagern vorgesehene Partie mit größerem Außendurchmesser als die beiden Gewindeabschnitte 81, 82 zwischen diesen vorgesehen sein. Auch eine zwei- oder mehrteilige Ausgestaltung der Gewindespindelhülse 08 beispielsweise mit einer mittigen Flanschverbindung ist denkbar.

Die hohlzylinderförmige Gewindespindelhülse 08 weist eine innere Mantelfläche und eine äußere Mantelfläche auf. Die äußere Mantelfläche ist mit den gegenläufigen Außengewindeabschnitten 81, 82 versehen. Entlang der Zylinderachse 80 gesehen ist hiermit zum einen Ende der Gewindespindelhülse 08 hin ein Außengewindeabschnitt 81 beispielsweise mit Rechtsgewinde, und zum gegenüberliegenden, anderen Ende hin ein Außengewindeabschnitt 82 beispielsweise mit Linksgewinde ausgebildet.

Auf den gegenläufigen Außengewindeabschnitten 81, 82 ist beidseitig jeden Transportspurenpaarträgers 07 jeweils eine Transporteinrichtung 06 gegenüber diesem quer zur Transportrichtung verstellbar angeordnet.

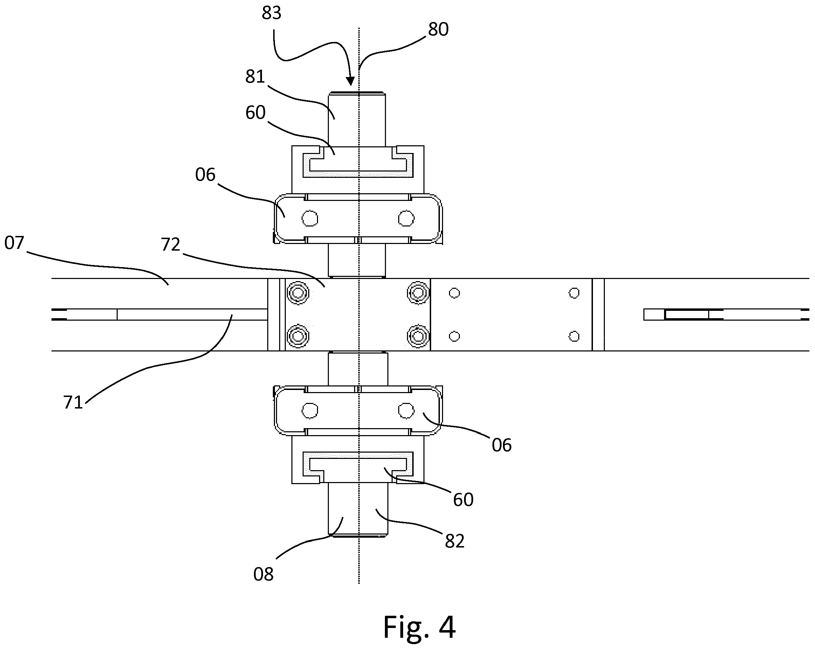

Jede Transporteinrichtung 06 weist hierzu je entlang der Erstreckung des ihr zugeordneten Transportspurenpaarträgers 07 parallel zur Transportrichtung gesehen vorgesehener und an diesem drehbar gelagerter Gewindespindelhülse 08 ein mit deren Rechts- beziehungsweise Linksgewinde korrespondierendes Innengewinde auf, je nachdem auf welcher Seite des Transportspurenpaarträgers 07 die Transporteinrichtung 06 vorgesehen ist (Fig. 1; Fig. 4).

Mit anderen Worten ist jeweils eine Transporteinrichtung 06 mit einem korrespondierenden, beispielsweise von einer unverdrehbar an der Transporteinrichtung 06 angeordneten Mutter 60 getragenen Innengewinde je Gewindespindelhülse 08 auf je einem der gegenläufigen Außengewindeabschnitte 81, 82 beidseitig jeden Transportspurenpaarträgers 07 gegenüber diesem quer zur Transportrichtung verstellbar angeordnet (Fig. 1; Fig. 4).

Mindestens eine Spindelwelle 09 ist um eine quer zur Transportrichtung verlaufende Spindelachse 90 an dem Gestell 02 drehbar gelagert angeordnet. Die Spindelwelle 09 ist durch die zentralen Öffnungen 83 derjenigen Gewindespindelhülsen 08 hindurchführt, deren Zylinderachsen 80 mit der Spindelachse 90 übereinstimmen. Die mit ihren zentralen Öffnungen 83 auf der Spindelwelle 09 angeordneten Gewindespindelhülsen 08 sind entlang der Spindelachse 90 längsverschiebbar, jedoch gegenüber der Spindelwelle 09 unverdrehbar angeordnet.

Mit anderen Worten ist mindestens eine Spindelwelle 09 vorgesehen, welche durch die zentralen Öffnungen 83 aller mit ihren Zylinderachsen 80 auf ihrer Spindelachse 90 liegenden, entlang der Spindelachse 90 verschiebbar und um die Spindelwelle 09 unverdrehbar auf der Spindelwelle 09 angeordneten Gewindespindelhülsen 08 hindurchführend an dem Gestell 02 drehbar gelagert angeordnet.

Vereinfacht ausgedrückt ist an dem Gestell 02 mindestens eine Spindelwelle 09 um eine quer zur Transportrichtung verlaufende, mit den Zylinderachsen 80 zumindest eines Teils der Gewindespindelhülsen 08 übereinstimmende Spindelachse 90 drehbar gelagert angeordnet.

Damit die Gewindespindelhülsen 08 entlang der Spindelachse 90 längsverschiebbar, jedoch gegenüber der Spindelwelle 09 unverdrehbar sind, weicht die Geometrie der inneren Mantelfläche in einem Querschnitt normal zur Zylinderachse 80 gesehen von der Kreisform ab. Die Geometrie der inneren Mantelfläche kann dabei ist in jedem Querschnitt entlang der Zylinderachse 80 identisch sein. Die innere Mantelfläche umhüllt damit die durchgängige, zentrale Öffnung 83 beispielsweise konstanten, von der Kreisform abweichenden Innenquerschnitts der Gewindespindelhülse 08. Außerdem weist die Spindelwelle 09 einen mit der Geometrie der inneren Mantelfläche korrespondierenden Außenquerschnitt auf. Die Spindelwelle führt durch die zentrale Öffnung aller mit ihren Zylinderachsen 80 auf ihrer Spindelachse 90 liegenden Gewindespindelhülsen 08 hindurch. Durch die korrespondierende Geometrie des Außenquerschnitts der Spindelwelle 09 und des Innenquerschnitts der zentralen Öffnung 83 der Gewindespindelhülse 08 sind die Gewindespindelhülsen 08 entlang der Spindelachse 90 verschiebbar auf, jedoch unverdrehbar gegenüber der Spindelwelle 09 angeordnet. Bei einer Drehung der Spindelwelle 09 drehen dadurch alle auf ihr angeordneten Gewindespindelhülsen 08 mit.

Darüber hinaus ist mindestens ein einen um eine gestellfeste, vorzugsweise vertikale und/oder bevorzugt normal auf einer von der Transportrichtung und der mindestens einen Spindelachse 90 aufgespannten Ebene aufstehende, in Fig. 1 senkrecht zur Bildebene verlaufende Steuerhebelachse 11 schwenkbar angeordneten und mit den Gassenblechen 03, 05 und den zwischen diesen angeordneten Transportspurenpaarträgern 07 entsprechend deren zunehmendem Abstand von der Steuerhebelachse 11 mit zunehmendem Übersetzungsverhältnis gekoppelten Steuerhebel 12 umfassenden, die Verschiebelage der Gassenbleche 03, 05 und der zwischen diesen angeordneten Transportspurenpaarträgern 07 quer zur Transportrichtung in Bezug auf die Steuerhebelachse 11 beeinflussender Scherenmechanismus 10 vorgesehen.

An jedem Transportspurenpaarträger 07 ist ein Unterteilungsblech lösbar anordbar beziehungsweise angeordnet. Hierzu kann der Transportspurenpaarträger 07 mit einer Nut 71 versehen sein, in welche das Unterteilungsblech einsteckbar sein kann.

Ist ein Unterteilungsblech an einem Transportspurenpaarträger 07 montiert, unterteilt dieses das betroffene Gassenpaar 04 in zwei Einzelgassen 40 mit jeweils einer durch eine eigene Transporteinrichtung 06 gebildeten Transportspur (Fig. 2). Sind alle Unterteilungsbleche montiert ergibt sich insgesamt eine gerade Anzahl von Einzelgassen 40.

Für sehr breite Artikel einhergehend mit sehr großer benötigter Breite der Gassen kann das zwischen den Transportspuren 06 eines Gassenpaars 04 angeordnete Unterteilungsblech entfernt werden.

Vorzugsweise sind die Gewindespindelhülsen 08 durch Formschluss unverdrehbar, jedoch längsverschiebbar auf der Spindelwelle 09 angeordnet.

So kann beispielsweise eine innere Mantelfläche einer Gewindespindelhülse 08 eine durchgängige, zentrale Öffnung 83 konstanten, von der Kreisform abweichenden Innenquerschnitts definieren, wobei die Spindelwelle 09 mit einem mit dem Innenquerschnitt übereinstimmenden beziehungsweise in mathematischem Sinne ähnlichen, etwas kleineren Außenquerschnitt versehen ist.

Geeignete, einfach herstellbare Außen- und Innenquerschnitte sind beispielsweise Vierkant, Sechskant, um nur einige denkbare Ausgestaltungen zu nennen.

Es kann vorteilhaft sein, im Hinblick auf den zur Verfügung stehenden Bauraum ein oder mehrere Spindelwellenpaare 91 aus je zwei versetzt angeordneten, beispielsweise durch ein Getriebe, etwa ein Zugmittelgetriebe, miteinander gekoppelten Spindelwellen 09 vorzusehen, auf denen versetzt zueinander den Transportspuren 06 benachbarter Gassenpaare 04 zugeordnete Gewindespindelhülsen 08 angeordnet sind (Fig. 1; Fig. 2).

Hierzu kann mindestens ein Spindelwellenpaar 91 aus zwei in Transportrichtung versetzt angeordneten Spindelwellen 09 vorgesehen sein, auf denen abwechselnd quer zur Transportrichtung aufeinander folgend vorgesehene Gewindespindelhülsen 08 gegenüber diesen längsverschiebbar und gegenüber diesen unverdrehbar angeordnet sind. Eine erste Spindelwelle 09 des Spindelwellenpaars 91 trägt hierbei die Gewindespindelhülsen 08 eines quer zur Transportrichtung gesehen ersten Gassenpaars 04 sowie gegebenenfalls vorgesehener dritter, fünfter und so weiter Gassenpaare 04, wohingegen eine zweite Spindelwelle 09 des Spindelwellenpaars 91 die Gewindespindelhülsen 08 eines zum ersten Gassenpaar benachbarten zweiten Gassenpaars 04 sowie gegebenenfalls vorgesehene vierte, sechste und so weiter Gassenpaare 04 trägt.

Grundsätzlich können mehrere entlang der Transportvorrichtung 01 angeordnete Spindelwellen 09 mittels eines Getriebes, beispielsweise mittels eines Zugmittelgetriebes, miteinander wirkverbunden sein, ganz gleich, ob es sich hierbei um einfache Spindelwellen 09 oder um Spindelwellen 09 von Spindelwellenpaaren 91 handelt.

Die Spindelwellen 09 eines Spindelwellenpaars können darüber hinaus höhenversetzt übereinander an der selben Position in Transportrichtung gesehen, oder sowohl höhenversetzt, als auch zueinander in Transportrichtung versetzt angeordnet sein.

Ebenso können mehrere entlang der Transportvorrichtung 01 angeordnete Scherenmechanismen 10 mittels eines Gestänges oder eines Getriebes, insbesondere mittels eines Zugmittelgetriebes, miteinander wirkverbunden sein.

Beispielsweise können mehrere entlang der Transportvorrichtung 01 vorgesehene Scherenmechanismen 10 untereinander mit einer oder mehreren Koppelstangen wirkverbunden sein. Diese können um parallel zu den Steuerhebelachsen 11 verlaufenden Koppelachsen schwenkbar an beispielsweise um 90° gegenüber den Steuerhebeln 12 verdreht angeordneten Koppelarmen gelenkig angeordnet sein.

Eine Kopplung mittels eines Zugmittelgetriebes kann mittels eines unverdrehbar mit dem Steuerhebel verbundenen, diesen gegebenenfalls bildenden oder umfassenden, oder von diesem umfassten oder gebildeten, beispielsweise halb-, dreiviertel oder vollkreisförmigen Quadranten vorgenommen sein, der mehrfach, vollständig oder nur teilweise von dem Zugmittel umschlungen sein kann.

Ein Verschwenken des Steuerhebels 12 eines Scherenmechanismus 10 hat bei beiden Ausführungsformen die gleichzeitige Verstellung aller entlang der Transportvorrichtung 01 vorgesehenen und miteinander gekoppelten Scherenmechanismen 10 zur Folge.

Der Scherenmechanismus 10 kann mit dem Steuerhebel 12 jeweils um eine eigene, parallel zur Steuerhebelachse 11 verlaufende Lenkerachse 13 schwenkbar und mit jeweils einem der quer zur Transportrichtung verschiebbar angeordneten Gassenblech 03, 05 oder mit jeweils einem der quer zur Transportrichtung verschiebbar angeordneten Transportspurenpaarträger 07 gelenkig verbundene Lenkerarme 14 umfassen. Jeder Lenkerarm 14 ist dabei mit dem Steuerhebel 12und genau einem Gassenblech 03, 05 oder einem Transportspurenpaarträger 07 gelenkig verbunden.

Die Lenkerachsen 13 der Lenkerarme 14 sind um so weiter von der Steuerhebelachse 11 entfernt am Steuerhebel 12 vorgesehen, je mehr Gassenbleche 03, 05 und Transportspurenpaarträger 07 sich zwischen einem mit einem einer Lenkerachse 13 zugeordneten Lenkerarm 14 gelenkig verbundenen Gassenblech 03, 05 oder Transportspurenpaarträger 07 und der Steuerhebelachse 11 befinden (Fig. 2).

Das durch zunehmende Abstände der Lenkerachsen 13 zur Steuerhebelachse 11 von innen nach außen zunehmende Übersetzungsverhältnis erlaubt mit einer Drehung des Steuerhebels 12 eine gleichzeitige Anpassung aller Einzelgassen 40 und Gassenpaare 04 der Transportvorrichtung 01 von einem Transport von Artikeln einer bestimmten Breite, beispielsweise eines bestimmten Durchmessers, an den Transport von Artikeln einer anderen Breite.

Alternativ kann der Scherenmechanismus durch den um die Steuerhebelachse 11 schwenkbaren Steuerhebel 12 sowie an diesem entsprechend der Positionen der Lenkerachsen 13 angeordnete, in an den Gassenblechen 03, 05 und an den Transportspurenpaarträger 07 entlang der Transportrichtung verlaufend ausgebildete Gleit- oder Rollenführungen eingreifende und in diesen längsverschiebbare Gleit- oder Rollenfinger gebildet sein.

Auch hier kommt ein von innen, von der Steuerhebelachse 11 ausgehend zunehmendes Übersetzungsverhältnis zum tragen, wodurch äußere Gassenbleche 03, 05 oder Transportspurenpaarträger 07 nicht nur um die Differenz der Breite der Einzelgassen 40 vor und nach der Anpassung verstellt werden, sondern darüber hinaus um die bis in ihren äußeren Bereich aufsummierten Differenzen der Breiten aller dazwischen liegenden Einzelgassen 40 verschoben werden.

Wie bereits erwähnt können die Gassenbleche 03, 05 und die Transportspurenpaarträger 07 - gegebenenfalls bis auf einen mittleren Transportspurenpaarträger 70 bei einer ungeraden Anzahl von Gassenpaaren 04 (Fig. 1), beziehungsweise gegebenenfalls bis auf ein mittleres Gassenblech 30 bei einer geraden Anzahl von Gassenpaaren 04 (Fig. 2) - quer zur Transportrichtung frei verschiebbar an dem Gestell 02 angeordnet sein.

In jedem Fall findet die Verstellung der Gassenbleche 03, 05 und der Transportspurenpaarträger 07 in Bezug auf einen durch die gestellfest angeordnete Steuerhebelachse 11 definierten Fixpunkt beziehungsweise auf eine alle gestellfesten Steuerhebelachsen 11 mehrerer entlang der Transportvorrichtung 01 vorgesehener Scherenmechanismen 10 schneidende Bezugslinie 100 statt.

Diese Bezugslinie 100 kann außerhalb eines zwischen den äußeren Gassenbleche 03 liegenden Gassenbereichs verlaufen, beispielsweise entlang einer Seite des Gestells 02.

Vorteilhaft ist jedoch, dass die Bezugslinie 100 innerhalb des Gassenbereichs, besonders bevorzugt sogar wie in Fig. 1 und Fig. 2 dargestellt mittig verläuft.

Verläuft die Bezugslinie 100 mittig und weist die Transportvorrichtung 01 wie in Fig. 1 eine ungerade Anzahl von Gassenpaaren 04 auf, so ist in diesem Fall der mittlere Transportspurenpaarträger 70 unverstellbar an dem Gestell 02 angeordnet. Der mittlere Transportspurenpaarträger 70 erstreckt sich entlang der Bezugslinie 100. Die mindestens eine Steuerhebelachse 11 des wenigstens einen Scherenmechanismus 10 der Transportvorrichtung 01 verläuft durch den mittleren Transportspurenpaarträger 70 hindurch.

Eine Anpassung der Transportvorrichtung 01 von einem Transport von Artikeln einer bestimmten Breite an den Transport von Artikeln einer anderen Breite erfolgt hierbei ausgehend von dem mittleren Transportspurenpaarträger 70.

Verläuft die Bezugslinie 100 mittig und weist die Transportvorrichtung 01 wie in Fig. 2 eine gerade Anzahl von Gassenpaaren 04 auf, so ist in diesem Fall das mittlere innere Gassenblech 30 unverstellbar an dem Gestell 02 angeordnet. Das mittlere Gassenblech 30 erstreckt sich entlang der Bezugslinie 100. Die mindestens eine Steuerhebelachse 11 des wenigstens einen Scherenmechanismus 10 der Transportvorrichtung 01 verläuft durch das mittlere Gassenblech 30 hindurch.

Eine Anpassung der Transportvorrichtung 01 von einem Transport von Artikeln einer bestimmten Breite an den Transport von Artikeln einer anderen Breite erfolgt hierbei ausgehend von dem mittleren Gassenblech 30.

In beiden vorgenannten Fällen ist es vorteilhaft, einen Scherenmechanismus 10 mit einem Steuerhebel 12 mit zwei gegenüberliegenden Hebelarmen 15, 16 vorzusehen, je einen für die auf jeweils einer Seite des Steuerhebels 12 beziehungsweise der Steuerhebelachse 11 quer zur Transportrichtung gesehen angeordneten Gassenbleche 03, 05 und Transportspurenpaarträger 07. Im Fall der in Fig. 1 und Fig. 2 dargestellten Ausführungsbeispielen ist je ein Hebelarm 15, 16 für die Gassenbleche 03, 05 und Transportspurenpaarträger 07 auf jeder Seite der mittig verlaufenden Bezugslinie 100 vorgesehen.

Im Fall einer Ausgestaltung des Scherenmechanismus 10 mit Lenkerarmen 14 sind dabei die mit den Gassenblechen 03, 05 und Transportspurenpaarträgern 07 auf der einen Seite des mittleren Gassenblechs 30 oder des mittleren Transportspurenpaarträgers 70 verbundenen Lenkerarme 14 mit dem einen Hebelarm 15, die mit den Gassenblechen 03, 05 und Transportspurenpaarträgern 07 auf der anderen Seite des mittleren Gassenblechs 30 oder des mittleren Transportspurenpaarträgers 70 verbundenen Lenkerarme 14 mit dem gegenüberliegenden Hebelarm 16 des Steuerhebels 12 verbunden.

Bei den jeweils eine Transportspur bildenden Transporteinrichtungen 06 kann es sich um einen Mattenförderer oder ein Förderband, mit einem endlos umlaufend angetriebenen Fördermittel, beispielsweise einem Scharnierband, einer Kette, einem Riemen handeln.

Es ist ersichtlich, dass die Transportvorrichtung 01 einen den mindestens einen Scherenmechanismus 10 und die eine oder mehreren Spindelwellen 09 und die mit den Innengewinden der Transporteinrichtungen 06 zusammenwirkenden Gewindespindelhülsen 08 umfassenden Verstellmechanismus zur Anpassung von einem Transport von Artikeln einer bestimmten Breite, beispielsweise eines bestimmten Durchmessers, an den Transport von Artikeln einer anderen Breite aufweist.

Die eine oder mehreren Spindelwellen 09 und die mit den beispielsweise von unverdrehbar an den Transporteinrichtungen 06 angeordneten Muttern 60 getragenen Innengewinden der Transporteinrichtungen 06 zusammenwirkenden Gewindespindelhülsen 08 bilden dabei einen Spindeltrieb.

Vorzugsweise ist ein gesamter, den mindestens einen Scherenmechanismus 10 und den Spindeltrieb umfassender Verstellmechanismus unterhalb einer durch die Transportspuren, beispielsweise den Obertrums von als Bandförderer ausgestalteten Transporteinrichtungen 06 gebildeten oder von diesen eingenommenen Transportebene angeordnet.

Dadurch besteht keinerlei Beschränkung hinsichtlich der Höhe der transportierbaren Artikel

Wichtig ist hervorzuheben, dass in den Einzelgassen 40 und/oder in den Gassenpaaren 04 Rückhalte- und/oder Einteilfinger zur Einstellung von Abständen zwischen in einem Artikelstrom aufeinanderfolgend transportierten Artikeln oder Artikelgruppen vorgesehen sein können.

Um die Transportvorrichtung 01 von einem Transport von Artikeln einer bestimmten Breite an den Transport von Artikeln einer anderen Breite anzupassen werden zunächst die Breiten der Einzelgassen 40 durch Verschwenken des mit gegebenenfalls mehreren entlang der Transportvorrichtung 01 angeordneten Scherenmechanismen 10 gekoppelten Steherhebels 12 eingestellt. Anschließend können zunächst durch Betätigung des Spindeltriebs alle Transportspuren bildenden Transporteinrichtungen 06 gleichzeitig mittig der Einzelgassen 40 eingestellt werden, bevor für einen gegebenenfalls vorgesehenen Transport überbreiter Artikel auf beiden Transportspuren eines Gassenpaars 40 die Unterteilungsbleche entfernt werden. Das Entfernen der Unterteilungsbleche und die Betätigung des Spindeltriebs können gegebenenfalls in umgekehrter Reihenfolge vorgenommen werden.

Wichtig ist hervorzuheben, dass die Merkmale Gassenblech 03, 05 und Unterteilungsblech stellvertretend für jedwede Ausgestaltung einer Begrenzung und/oder Trennung benachbarter Einzelgassen 40 und/oder Gassenpaare 04 steht, wie etwa von Führungsgeländern sowie von Einrichtungen mit Gassenblechträger und lösbar an diesem angeordnetem Führungsgeländer oder Gassenblech.

In Fig. 1, Fig. 2 und Fig. 4 sind daher gleichbedeutend tatsächliche Begrenzungen in Fig. 1, sowie in Fig. 2 und Fig. 4 Träger solcher tatsächlicher Begrenzungen stellvertretend für die Merkmale Gassenblech 03, 05 und mit einem Unterteilungsblech ausstattbare Transportspurenpaarträger 07 dargestellt.

Zusätzliche, zur vollständigen Lösung der der Erfindung zu Grunde liegenden Aufgabe unter Behebung sämtlicher Nachteile des Standes der Technik Vorteile gegenüber dem Stand der Technik ergeben sich durch eine schnelle und präzise Anpassung an Artikel unterschiedlicher Breite. Die mit der Umstellung verbundenen Stillstandzeiten sind auf ein Mindestmaß verkürzt. Hierdurch wird ein wesentliches Ziel in der Automatisierungstechnik erreicht, welches eine hohe Auslastung der Umgänge vornehmenden Vorrichtungen vorsieht. Dieses wird einerseits erreicht, indem einerseits innerhalb möglichst kurzer Zeit mit möglichst vielen Artikeln umgegangen wird und andererseits Stillstandzeiten auf ein kleinstmögliches Maß verringert werden.

Damit einher geht der Vorteil verringerter, sich durch Stillstände von Vorrichtungen zum Umgang mit Artikeln ergebender Kosten.

Darüber hinaus verringert die Möglichkeit des Umgangs mit verschiedenartigen und verschieden breiten sowie in der Höhe unbegrenzter Artikeln Totzeiten, in denen Vorrichtungen zum Umgang mit Artikeln abgeschaltet verbleiben, da sie nicht an den Umgang mit bestimmten Artikeln angepasst werden können, wenn eine permanente Auslastung mit genügend gleichartigen Artikeln nicht sichergestellt werden kann.

Ebenfalls wichtig ist hervorzuheben, dass die beschriebene Transportvorrichtung 01 in bestehende Vorrichtungen zum Umgang mit Artikeln nachgerüstet werden kann. Die Erfindung umfasst demnach auch einen Nachrüstsatz mit einer entsprechenden Transportvorrichtung 01.

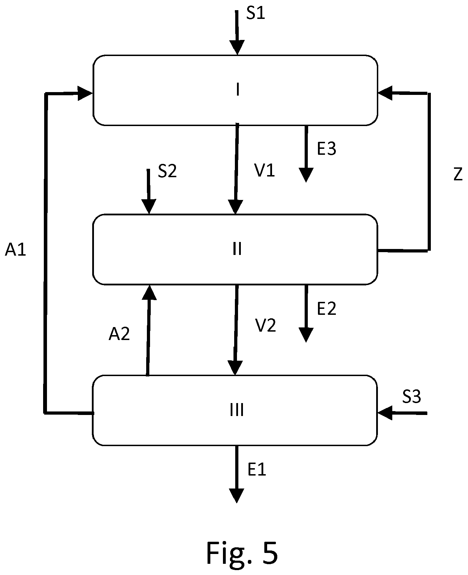

Fig. 5 zeigt ein Ablaufdiagramm eines Verfahrens zur Anpassung einer Transportvorrichtung 01 mit mindestens zwei durch Gassenbleche 03, 05 abgegrenzte, jeweils in zwei Einzelgassen 40 unterteilbaren Gassenpaaren 04 mit je zwei jeweils durch eine eigene Transporteinrichtung 06 gebildeten Transportspuren zur Abstützung und zum Transport mindestens eines Artikelstroms aus geordnet nacheinander transportierten Artikeln in einer Transportrichtung an verschieden breite Artikel, insbesondere von der Breite zuvor transportierter Artikel an die Breite nachfolgend zu transportierender Artikel.

Eine ein Gassenpaar 04 in zwei Einzelgassen 40 unterteilende, beispielsweise ein Unterteilungsblech umfassende Unterteilung ist zwischen den beiden jeweils durch eine eigene Transporteinrichtung 06 gebildeten Transportspuren des Gassenpaars 40 angeordnet beziehungsweise anordbar. Jede durch eine eigene Transporteinrichtung 06 gebildete Transportspur ist damit bei montierter Unterteilung einer Einzelgasse 40 zugeordnet beziehungsweise bei entfernter Unterteilung einem Gassenpaar 04 zugeordnet und einer Einzelgasse 40 durch Montage einer Unterteilung zuordbar.

Jedes Gassenpaar 04 ist damit bei entfernter Unterteilung zum Transport eines Artikelstroms aus geordnet nacheinander transportierten Artikeln oder bei montiertem Unterteilungsblech zum Transport von zwei Artikelströmen aus jeweils geordnet nacheinander transportierten Artikeln in einer Transportrichtung vorgesehen.

Die zwei Transporteinrichtungen 06 der Transportspuren eines Gassenpaars 04 sind gemeinsam und zugleich gegenläufig abstandsveränderlich an einem mittig des Gassenpaars 04 vorgesehenen Transportspurenpaarträger 07 angeordnet, an dem auch eine beispielsweise durch ein Unterteilungsblech gebildete Unterteilung des Gassenpaars 04 in Einzelgassen 40 lösbar angeordnet und/oder anordbar ist.

Dabei sind die Gassenpaare abhängig von der Breite zuvor transportierter Artikel bei montierten Unterteilungen jeweils in zwei Einzelgassen unterteilt oder bei entfernten Unterteilungen jeweils in zwei Einzelgassen unterteilbar.

Das Verfahren sieht in einem ersten Verfahrensschritt I zunächst vor, die Breiten sämtlicher Einzelgassen 40 oder Gassenpaare 04 gleichzeitig einzustellen, wobei die jeweils immer mittig innerhalb eines jeden Gassenpaars 04 geführten Transportspurenpaarträger 07 bei der Einstellung der Breite der Einzelgassen 40 oder Gassenpaare 04 bereits mit verstellt werden.

Anschließend sieht das Verfahren in einem zweiten Verfahrensschritt II eine Einstellung beziehungsweise Feinjustierung der jeweils paarweise gegenläufig abstandsveränderlich an den ihrem jeweiligen Gassenpaar 04 zugeordneten Transportspurenpaarträger 07 angeordneten Transporteinrichtungen 06 quer zur Transportrichtung auf die Mitten der Einzelgassen 40 vor.

Dabei kann die gleichzeitige Einstellung beziehungsweise Feinjustierung aller jeweils paarweise gegenläufig abstandsveränderlich an den ihrem jeweiligen Gassenpaar 04 zugeordneten Transportspurenpaarträgern 07 angeordneten Transporteinrichtungen 06 quer zur Transportrichtung auf die Mitten der Einzelgassen 40 erfolgen.

Zur Einstellung der Transporteinrichtungen 06 quer zur Transportrichtung auf die Mitten der Einzelgassen 40 sieht das Verfahren hiernach vor, alle jeweils paarweise gegenläufig quer zur Transportrichtung abstandsveränderlich an den Transportspurenpaarträgern 07 angeordneten Transporteinrichtungen 06 gemeinsam quer zur Transportrichtung zu verstellen, bis diese sich alle gleichzeitig in den Mitten ihrer jeweiligen Einzelgassen 40 einfinden.

Dabei sind die Gassenpaare 04 abhängig von der Breite zuvor transportierter Artikel bei montierten Unterteilungen jeweils in zwei Einzelgassen 40 unterteilt oder bei entfernten Unterteilungen jeweils in zwei Einzelgassen 40 unterteilbar.

Da die die Transportspuren bildenden Transporteinrichtungen 06 jeweils paarweise an einem immer mittig innerhalb eines jeden Gassenpaars 04 geführten Transportspurenpaarträger 07 angeordnet sind, werden die Transporteinrichtungen 06 bei der Einstellung der Breite der Einzelgassen 40 oder Gassenpaare 40 bereits mit verstellt und müssen nur noch mittig in den Einzelgassen des ihrem Transportspurenpaarträger 07 zugeordneten Gassenpaars 04 feinjustiert werden.

Vorteilhaft werden zur gleichzeitigen Einstellung der Breiten sämtlicher Einzelgassen 40 oder Gassenpaare 04 ausgehend von einem Ursprung sämtliche quer zur Transportrichtung vom Ursprung entfernten Gassenbleche 03, 05 und Transportspurenpaarträger 07 gleichzeitig und mit einem mit zunehmendem Abstand vom Ursprung quer zur Transportrichtung gesehen zunehmendem Übersetzungsverhältnis quer zur Transportrichtung verstellt, so dass jedes weiter quer zur Transportrichtung vom Ursprung entfernte Gassenblech 03, 05 und jeder weiter quer zur Transportrichtung vom Ursprung entfernte Transportspurenpaarträger 07 nicht nur um die Differenz der zuvor eingestellten Ausgangsbreite der Einzelgassen 40 oder Gassenpaare 04 zur einzustellenden Zielbreite der Einzelgassen 40 oder Gassenpaare 04, sondern jeweils um die Summe der Differenzen der Ausgangsbreite zur Zielbreite aller zwischen dem jeweiligen Gassenblech 03, 05 oder dem jeweiligen Transportspurenpaarträger 07 und dem Ursprung befindlichen Einzelgassen 40 oder Gassenpaare 04 verstellt wird.

Sofern die beispielsweise Unterteilungsbleche umfassenden Unterteilungen zuvor montiert oder entfernt waren, können diese beispielsweise in einem dritten Verfahrensschritt III im Anschluss an die Feinjustierung entfernt oder montiert werden oder sie können montiert oder entfernt belassen werden, je nachdem, ob die nachfolgend zu transportierenden Artikel so breit sind, dass sie beispielsweise zu deren sicherem Transport auf zwei Transporteinrichtungen 06 transportiert werden müssen, oder ob sie schmal genug sind, um in einer Einzelgasse 40 transportiert werden zu können.

Das Verfahren kann eine gemeinsame Verstellung der Breite der Einzelgassen 40 oder Gassenpaare 04 mit zunehmendem Übersetzungsverhältnis anhand eines Scherenmechanismus 10, entsprechend der zuvor beschriebenen Transportvorrichtung 01, und/oder eine gemeinsame Einstellung der Lagen der Transporteinrichtungen 06 quer zur Transportrichtung auf die Mitten der Einzelgassen 40 anhand von Gewindespindelhülsen 08 mit gegenläufigen Gewindeabschnitten 81, 82, entsprechend der zuvor beschriebenen Transportvorrichtung 01, vorsehen.

Das Verfahren eignet sich demnach beispielsweise zur Anpassung einer zuvor beschriebenen Transportvorrichtung 01 mit mindestens zwei durch zwischen ihnen angeordnete, innere Gassenbleche 03 voneinander abgegrenzte, jeweils durch ein Unterteilungsblech in zwei Einzelgassen 40 unterteilbare Gassenpaare 04 an verschieden breite Artikel, insbesondere von der Breite zuvor transportierter Artikel an die Breite nachfolgend zu transportierender Artikel.

Die jeweils äußeren Gassenpaare 04 sind nach außen hin durch jeweils ein äußeres Gassenblech 05 begrenzt. Die Zahl der Gassenbleche 03, 05 ist damit um eins höher als die Anzahl der Gassenpaare 04. Zwischen benachbarten Gassenpaaren 04 befindet sich immer nur ein Gassenblech 03.

Da die die Transportspuren bildenden Transporteinrichtungen 60 jeweils paarweise an einem immer mittig innerhalb eines jeden Gassenpaars 04 geführten Transportspurenpaarträger 07 angeordnet sind, werden die Transporteinrichtungen 06 bei der Einstellung der Breite der Einzelgassen 40 oder Gassenpaare 04 bereits mit verstellt und müssen nur noch mittig in den Einzelgassen 40 des ihrem Transportspurenpaarträger 07 zugeordneten Gassenpaars 04 eingestellt beziehungsweise feinjustiert werden.

Demnach sieht das Verfahren anschließend eine Einstellung beziehungsweise Feinjustierung der Transporteinrichtungen 06 quer zur Transportrichtung auf die Mitten der Einzelgassen 40 vor. Hierzu sieht das Verfahren vor, die jeweils paarweise gegenläufig quer zur Transportrichtung abstandsveränderlich an den Transportspurenpaarträgern 07 angeordneten Transporteinrichtungen 06 gemeinsam quer zur Transportrichtung zu verstellen, bis diese sich alle gleichzeitig in den Mitten ihrer jeweiligen Einzelgassen 40 einfinden.

Zusammengefasst sieht das Verfahren vor, zunächst die Breiten sämtlicher Einzelgassen 40 oder Gassenpaare 04 zugleich einzustellen, und anschließend eine Feinjustierung der Transporteinrichtungen 06 auf die Mitten der Einzelgassen 40 vorzunehmen.

Wichtig ist hervorzuheben, dass:
- das Verfahren wie in Fig. 5 durch den Pfeil S1 angedeutet, mit dem ersten Verfahrensschritt I beginnen und anschließend wie in Fig. 5 durch die Pfeile V1 und E2 angedeutet, nach Ausführung des zweiten Verfahrensschritts II enden kann.
- das Verfahren wie in Fig. 5 durch den Pfeil S1 angedeutet, mit dem ersten Verfahrensschritt I beginnen und anschließend wie in Fig. 5 durch die Pfeile V1, V2 und E1 angedeutet, nach Ausführung zunächst des zweiten Verfahrensschritts II und anschließend des dritten Verfahrensschritts III enden kann.
- das Verfahren wie in Fig. 5 durch den Pfeil S1 angedeutet, mit dem ersten Verfahrensschritt I beginnen und anschließend wie in Fig. 5 durch die Pfeile V1, Z, V1, V2 und E1 angedeutet, nach Ausführung des zweiten Verfahrensschritts II den ersten Verfahrensschritt I und den zweiten Verfahrensschritt II nochmals wiederholen und anschließend nach Ausführung des dritten Verfahrensschritts III enden kann. Dies kann in Verbindung mit einer Verstellung von einer sehr großen Ausgangsbreite auf eine sehr kleine Zielbreite oder von einer sehr kleinen Ausgangsbreite auf eine sehr breite Zielbreite erforderlich sein.
- das Verfahren wie in Fig. 5 durch den Pfeil S1 angedeutet, mit dem ersten Verfahrensschritt I beginnen und anschließend wie in Fig. 5 durch die Pfeile V1, Z, und E3 angedeutet, nach Ausführung des zweiten Verfahrensschritts II den ersten Verfahrensschritt I nochmals wiederholen und anschließend enden kann. Dies kann in Verbindung mit einer Verstellung von einer großen Ausgangsbreite auf eine kleine Zielbreite oder von einer kleinen Ausgangsbreite auf eine breite Zielbreite erforderlich sein, wenn vorher montierte Unterteilungsbleche beziehungsweise Unterteilungen beibehalten werden sollen oder in der Ausgangsbreite keine Unterteilungen vorhanden sind und auch in der Zielbreite nicht benötigt werden.
- das Verfahren wie in Fig. 5 durch den Pfeil S2 angedeutet, mit dem zweiten Verfahrensschritt II beginnen und anschließend wie in Fig. 5 durch die Pfeile Z und E3 angedeutet, nach Ausführung des ersten Verfahrensschritts I enden kann. Dies kann in Verbindung mit einer Verstellung von einer sehr großen Ausgangsbreite auf eine sehr kleine Zielbreite vorteilhaft sein, da so zunächst die Transportspuren ganz eng zusammengefahren werden können und anschließend die Breiten der Gassenpaare oder Einzelgassen in einem Zug ganz verkleinert werden können und beispielsweise vorher montierte Unterteilungsbleche beziehungsweise Unterteilungen beibehalten werden sollen oder in der Ausgangsbreite keine Unterteilungen vorhanden sind und auch in der Zielbreite nicht benötigt werden.
- das Verfahren in direkter Anlehnung an das vorhergehende Ausführungsbeispiel wie in Fig. 5 durch den Pfeil S2 angedeutet, mit dem zweiten Verfahrensschritt II beginnen und anschließend wie in Fig. 5 durch die Pfeile Z, V1 und E2 angedeutet, nach Ausführung des ersten Verfahrensschritts I sowie wiederholter Ausführung des zweiten Verfahrensschritts II enden kann. Dies kann in Verbindung mit einer Verstellung von einer sehr großen Ausgangsbreite auf eine sehr kleine Zielbreite vorteilhaft sein, da so zunächst die Transportspuren ganz eng zusammengefahren werden können und anschließend die Breiten der Gassenpaare oder Einzelgassen in einem Zug ganz verkleinert werden können, wobei die nochmalige Ausführung des zweiten Verfahrensschritts eine Nacheinstellung der Transporteinrichtungen 06 auf die Mitten der Einzelgassen 40 erlaubt. Dabei müssen vorher montierte Unterteilungsbleche beziehungsweise Unterteilungen beibehalten werden oder - sofern in der Ausgangsbreite keine Unterteilungen vorhanden sind - auch in der Zielbreite keine benötigt werden.
- das Verfahren wie in Fig. 5 durch den Pfeil S2 angedeutet, mit dem zweiten Verfahrensschritt II beginnen und anschließend wie in Fig. 5 durch die Pfeile Z, V1, V2 und E1 angedeutet, nach Ausführung des ersten Verfahrensschritts I sowie wiederholter Ausführung des zweiten Verfahrensschritts II und anschließender Ausführung des dritten Verfahrensschritts III enden kann. Dies kann in Verbindung mit einer Verstellung von einer sehr großen Ausgangsbreite auf eine sehr kleine Zielbreite vorteilhaft sein, da so zunächst die Transportspuren ganz eng zusammengefahren werden können und anschließend die Breiten der Gassenpaare oder Einzelgassen in einem Zug ganz verkleinert werden können, wobei die nochmalige Ausführung des zweiten Verfahrensschritts eine Nacheinstellung der Transporteinrichtungen 06 auf die Mitten der Einzelgassen 40 erlaubt. Anschließend können im dritten Verfahrensschritt III die Unterteilungen der Gassenpaare 04 in Einzelgassen 40 noch gesteckt oder entfernt werden.

Zusätzliche Variationsmöglichkeiten ergeben sich durch einen Beginn des Verfahrens mit durch entfernen oder montieren der Gassenpaare 04 in Einzelgassen 40 unterteilenden Unterteilungen, wie durch den Pfeil S3 in Fig. 5 angedeutet.

Im Anschluss hieran können der erste Verfahrensschritt I und der zweite Verfahrensschritt II wie durch die Pfeile S3, A1 und V1 angedeutet ausgeführt werden. Das Verfahren kann hiernach enden, wie durch den Pfeil E2 in Fig. 5 angedeutet. Alternativ kann das Verfahren hiernach eine Wiederholung des ersten Verfahrensschritts I, wie durch die Pfeile S3, A1, V1, Z und E3 in Fig. 5 angedeutet, oder eine Wiederholung des ersten Verfahrensschritts I und des zweiten Verfahrensschritts II, wie durch die Pfeile S3, A1, V1, Z, V1 und E2 in Fig. 5 angedeutet vorsehen.

Zusätzliche Möglichkeiten ergeben sich durch Beginn im dritten Verfahrensschritt III, auf welchen hin zunächst der zweite Verfahrensschritt II ausgeführt wird, wie in Fig. 5 durch die Pfeile S3, A2 angedeutet. Hiernach können sich durch die Pfeile Z und E3 oder Z, V1 und E2 in Fig. 5 angedeutete Abfolgen der Verfahrensschritte anschließen.

Die Erfindung ist insbesondere im Bereich der Herstellung und dem Betrieb von Anlagen und Vorrichtungen der Automatisierungstechnik gewerblich anwendbar, wo mit einer Vielzahl beispielsweise gleichartiger Artikel umgegangen werden muss, beispielsweise in der Automatisierungstechnik für die Lebensmittel- und Getränkeindustrie und/oder in der Verpackungstechnik und in der Verpackungsindustrie.

### Bezugszeichenliste

- 01: Transportvorrichtung
- 02: Gestell
- 03: inneres Gassenblech
- 04: Gassenpaar
- 05: äußeres Gassenblech
- 06: Transporteinrichtung
- 07: Transportspurenpaarträger
- 08: Gewindespindelhülse
- 09: Spindelwelle
- 10: Scherenmechanismus
- 11: Steuerhebelachse
- 12: Steuerhebel
- 13: Lenkerachse
- 14: Lenkerarm
- 15: Hebelarm
- 16: Hebelarm

- 30: mittleres Gassenblech
- 40: Einzelgasse
- 60: Mutter
- 70: mittlerer Transportspurenpaarträger
- 71: Nut
- 72: Lagerdeckel
- 80: Zylinderachse
- 81: Außengewindeabschnitt
- 82: Außengewindeabschnitt
- 83: zentrale Öffnung
- 84: Einstich
- 90: Spindelachse
- 91: Spindelwellenpaar
- 100: Bezugslinie

- T: Pfeil (Transportrichtung)

## Patentansprüche

1. Transportvorrichtung (01) mit einem Gestell (02) und einem oder mehreren parallel verlaufenden, durch zwischen ihnen angeordnete innere Gassenbleche (03) voneinander abgegrenzten Gassenpaaren (04), wobei:
- die äußeren Gassenpaare (04) nach außen hin durch jeweils ein äußeres Gassenblech (05) begrenzt sind,
- jedes Gassenpaar (04) zwei jeweils durch eine eigene Transporteinrichtung (06) gebildete Transportspuren aufweist,
- zwischen den beiden Transporteinrichtungen (06) jeden Gassenpaars (04) jeweils ein Transportspurenpaarträger (07) angeordnet ist,
- die Gassenbleche (03, 05) und die Transportspurenpaarträger (07) quer zu einer Transportrichtung (T) frei verschiebbar an dem Gestell (02) angeordnet sind, **dadurch gekennzeichnet, dass**:
- an jedem Transportspurenpaarträger (07) mindestens eine Gewindespindelhülse (08) mit gegenläufigen Außengewindeabschnitten (81, 82), einer durchgängigen, zentralen Öffnung (83) und einer quer zur Transportrichtung (T) verlaufenden Zylinderachse (80) längs ihrer Zylinderachse (80) unverschiebbar und um ihre Zylinderachse (80) drehbar gelagert angeordnet ist,
- beidseitig jeden Transportspurenpaarträgers (07) gegenüber diesem quer zur Transportrichtung (T) verstellbar jeweils eine Transporteinrichtung (06) mit einem korrespondierenden Innengewinde je am Transportspurenpaarträger (07) drehbar gelagerter Gewindespindelhülse (08) auf je einem der gegenläufigen Außengewindeabschnitte (81, 82) angeordnet ist,
- mindestens eine Spindelwelle (09) um eine quer zur Transportrichtung (T) verlaufende Spindelachse (90) an dem Gestell (02) drehbar gelagert angeordnet ist, welche längsverschiebbar, jedoch unverdrehbar durch die zentralen Öffnungen (83) derjenigen mit ihren Zylinderachsen (80) mit der Spindelachse (90) übereinstimmenden Gewindespindelhülsen (08) hindurchführt, und
- mindestens ein einen um eine gestellfeste Steuerhebelachse (11) schwenkbar angeordneten und mit den Gassenblechen (03, 05) und den zwischen diesen angeordneten Transportspurenpaarträgern (07) wirkverbundenen Steuerhebel (12) umfassenden, die Verschiebelage der Gassenbleche (03, 05) und der Transportspurenpaarträger (07) quer zur Transportrichtung (T) in Bezug auf die Steuerhebelachse (11) beeinflussender Scherenmechanismus (10) vorgesehen ist.

2. Transportvorrichtung nach Anspruch 1, wobei an jedem Transportspurenpaarträger (07) ein Unterteilungsblech lösbar angeordnet ist.

3. Transportvorrichtung nach Anspruch 1 oder 2, wobei die Gewindespindelhülsen (08) durch Formschluss unverdrehbar, jedoch längsverschiebbar auf der Spindelwelle (09) angeordnet sind.

4. Transportvorrichtung nach Anspruch 1, 2 oder 3, wobei mindestens ein Spindelwellenpaar (91) aus zwei in Transportrichtung (T) versetzt angeordneten Spindelwellen (09) vorgesehen ist, auf denen abwechselnd quer zur Transportrichtung (T) aufeinander folgend vorgesehene Gewindespindelhülsen (08) längsverschiebbar und unverdrehbar angeordnet sind.

5. Transportvorrichtung nach einem der Ansprüche 1 bis 4, wobei mehrere entlang der Transportvorrichtung (01) angeordnete Spindelwellen (09) mittels eines Getriebes miteinander wirkverbunden sind.

6. Transportvorrichtung nach einem der Ansprüche 1 bis 5, wobei mehrere entlang der Transportvorrichtung (01) angeordnete Scherenmechanismen (10) mittels eines Gestänges oder eines Getriebes miteinander wirkverbunden sind.

7. Transportvorrichtung nach einem der voranstehenden Ansprüche, wobei zwischen den gegenläufigen Außengewindeabschnitten (81, 82) der Gewindespindelhülse (08) mindestens ein Einstich (84) vorgesehen ist.

8. Transportvorrichtung nach einem der voranstehenden Ansprüche, wobei der Scherenmechanismus (10) jeweils mit dem Steuerhebel (12) um eine eigene, parallel zur Steuerhebelachse (11) verlaufende Lenkerachse (13) schwenkbar und mit jeweils einem der quer zur Transportrichtung (T) verschiebbar angeordneten Gassenblech (03, 05) oder mit jeweils einem der quer zur Transportrichtung (T) verschiebbar angeordneten Transportspurenpaarträger (07) gelenkig verbundene Lenkerarme (14) umfasst, deren Lenkerachsen (13) um so weiter von der Steuerhebelachse (11) entfernt am Steuerhebel (12) vorgesehen sind, je mehr Gassenbleche (03, 05) und Transportspurenpaarträger (07) sich zwischen einem mit einem einer Lenkerachse (13) zugeordneten Lenkerarm (14) gelenkig verbundenen Gassenblech (03, 05) oder Transportspurenpaarträger (07) und der Steuerhebelachse (11) befinden.

9. Transportvorrichtung nach einem der voranstehenden Ansprüche 1 bis 7, wobei der Scherenmechanismus (10) den um die Steuerhebelachse (11) schwenkbaren Steuerhebel (12) sowie an diesem angeordnete, in an den Gassenblechen (03, 05) und an den Transportspurenpaarträger (07) entlang der Transportrichtung (T) verlaufend ausgebildete Gleit- oder Rollenführungen eingreifende und in diesen längsverschiebbare Gleit- oder Rollenfinger umfasst.

10. Transportvorrichtung nach einem der voranstehenden Ansprüche, wobei ein mittleres Gassenblech (30) gestellfest angeordnet ist und die Steuerhebelachse (11) durch das mittlere Gassenblech (30) hindurch verläuft.

11. Transportvorrichtung nach einem der Ansprüche 1 bis 9, wobei ein mittlerer Transportspurenpaarträger (70) gestellfest angeordnet ist und die Steuerhebelachse (11) durch den mittleren Transportspurenpaarträger (70) hindurch verläuft.

12. Transportvorrichtung nach einem der voranstehenden Ansprüche, wobei der Steuerhebel (12) zwei gegenüberliegende Hebelarme (15, 16) aufweist, je einen für die auf jeweils einer Seite der Steuerhebelachse (11) quer zur Transportrichtung (T) gesehen angeordneten Gassenbleche (03, 05) und Transportspurenpaarträger (07).

13. Transportvorrichtung nach einem der voranstehenden Ansprüche, wobei es sich bei den jeweils eine Transportspur bildenden Transporteinrichtungen (06) um einen Mattenförderer oder ein Förderband mit einem endlos umlaufend angetriebenen Fördermittel handelt.

14. Transportvorrichtung nach einem der voranstehenden Ansprüche, wobei ein gesamter, den mindestens einen Scherenmechanismus (10) und einen Spindeltrieb mit der mindestens einen Spindelwelle (09) und den mit den Innengewinden der Transporteinrichtungen (06) zusammenwirkenden Gewindespindelhülsen (08) umfassender Verstellmechanismus unterhalb einer durch die Transporteinrichtungen (06) gebildeten oder von diesen eingenommenen Transportebene angeordnet ist.

15. Transportvorrichtung nach einem der voranstehenden Ansprüche, wobei in den Gassenpaaren (04) Rückhalte- und/oder Einteilfinger zur Einstellung von Abständen zwischen in einem Artikelstrom aufeinanderfolgend transportierten Artikeln oder Artikelgruppen vorgesehen sind.

16. Verfahren zur Anpassung einer Transportvorrichtung (01) nach Anspruch 1 mit mindestens zwei durch Gassenbleche (03, 05) abgegrenzte, jeweils in zwei Einzelgassen (40) unterteilbare Gassenpaare (04) mit je zwei jeweils durch eine eigene Transporteinrichtung (06) gebildeten Transportspuren an verschieden breite Artikel, wobei die Transporteinrichtungen (06) eines Gassenpaars (04) gemeinsam gegenläufig abstandsveränderlich an einem mittig des Gassenpaars (04) vorgesehenen Transportspurenpaarträger (07) angeordnet sind, an dem auch eine Unterteilung des Gassenpaars (04) in Einzelgassen (40) angeordnet und/oder anordbar ist, wobei die Breiten sämtlicher Einzelgassen (40) oder Gassenpaare (04) gleichzeitig eingestellt werden, wobei die jeweils immer mittig innerhalb eines jeden Gassenpaars (04) geführten Transportspurenpaarträger (07) bei der Einstellung der Breite der Einzelgassen (40) oder Gassenpaare (04) mit verstellt werden, und eine Feinjustierung der jeweils paarweise gegenläufig abstandsveränderlich an den Transportspurenpaarträgern (07) angeordneten Transporteinrichtungen (06) quer zur Transportrichtung (T) auf die Mitten der Einzelgassen (40) erfolgt.

17. Verfahren nach Anspruch 16, wobei zur gleichzeitigen Einstellung der Breiten sämtlicher Einzelgassen (40) oder Gassenpaare (04) ausgehend von einem Ursprung sämtliche quer zur Transportrichtung (T) vom Ursprung entfernten Gassenbleche (03, 05) und Transportspurenpaarträger (07) gleichzeitig und mit einem mit zunehmendem Abstand vom Ursprung quer zur Transportrichtung (T) gesehen zunehmendem Übersetzungsverhältnis quer zur Transportrichtung (T) zu verstellen, so dass jedes weiter quer zur Transportrichtung (T) vom Ursprung entfernte Gassenblech (03, 05) und jeder weiter quer zur Transportrichtung (T) vom Ursprung entfernte Transportspurenpaarträger (07) jeweils um die Summe der Differenzen der Ausgangsbreite zur Zielbreite aller zwischen dem jeweiligen Gassenblech (03, 05) oder dem jeweiligen Transportspurenpaarträger (07) und dem Ursprung befindlichen Einzelgassen (40) oder Gassenpaare (04) verstellt wird.

18. Verfahren nach Anspruch 16 oder 17, wobei die gleichzeitige Feinjustierung aller jeweils paarweise gegenläufig abstandsveränderlich an den Transportspurenpaarträgern (07) angeordneten Transporteinrichtungen (06) quer zur Transportrichtung (T) auf die Mitten der Einzelgassen (40) erfolgt.

19. Verfahren nach Anspruch 16, 17 oder 18, wobei die beispielsweise Unterteilungsbleche umfassenden Unterteilungen im Anschluss an die Feinjustierung entfernt oder montiert werden oder entfernt oder montiert belassen werden, je nachdem, ob die nachfolgend zu transportierenden Artikel so breit sind, dass sie auf zwei Transporteinrichtungen (06) transportiert werden müssen, oder ob sie schmal genug sind, um in einer Einzelgasse (40) transportiert werden zu können.

20. Verfahren nach einem der Ansprüche 15 bis 19, wobei eine gemeinsame Verstellung der Breite der Einzelgassen (40) oder Gassenpaare (04) mit zunehmendem Übersetzungsverhältnis anhand eines Scherenmechanismus (10), und/oder eine gemeinsame Einstellung der Transporteinrichtungen (06) quer zur Transportrichtung (T) auf die Mitten der Einzelgassen (40) anhand von Gewindespindelhülsen (08) mit gegenläufigen Gewindeabschnitten (81, 82) vorgesehen ist.

## Claims

1. A transport device (01) having a frame (02) and one or more parallel lane pairs (04) separated from one another by inner lane plates (03) arranged between them, wherein:
- the outer lane pairs (04) are each delimited towards outside by an outer lane plate (05),
- each lane pair (04) has two transport tracks each formed by its own transport device (06),
- a transport track pair carrier (07) each is arranged between the two transport devices (06) of each lane pair (04),
- the lane plates (03, 05) and the transport track pair carriers (07) are arranged on the frame (02) so as to be freely displaceable transversely to a transport direction (T), **characterized in that**:
- at least one threaded spindle sleeve (08) with counter-rotating external thread sections (81, 82), a continuous, central opening (83), and a cylinder axis (80) extending transversely to the transport direction (T) is arranged on each transport track pair carrier (07) such that it cannot be moved along its cylinder axis (80) and is mounted rotatably about its cylinder axis (80),
- on both sides of each transport track pair carrier (07), one transport device (06) each is arranged on one of the counter-rotating external thread sections (81, 82) through a corresponding internal thread for each threaded spindle sleeve (08) rotatably mounted on the transport track pair carrier (07) and adjustable transversely to the transport direction (T) relative to the transport track pair carrier (07),
- at least one spindle shaft (09) is arranged on the frame (02) such that it can rotate about a spindle axis (90) extending transversely to the transport direction (T), which spindle shaft (09) passes longitudinally displaceably, but non-rotatably, through the central openings (83) of those threaded spindle sleeves (08) whose cylinder axes (80) correspond to the spindle axis (90), and
- at least one scissor mechanism (10) is provided which comprises a control lever (12) which is arranged so as to be pivotable about a control lever axis (11) fixed to the frame and is operatively connected to the lane plates (03, 05) and the transport track pair carriers (07) arranged between these and which scissor mechanism (10) influences the displacement position of the lane plates (03, 05) and of the transport track pair carriers (07) transversely with respect to the transport direction (T) in relation to the control lever axis (11).

2. The transport device as recited in claim 1, wherein a partition plate is detachably arranged on each transport track pair carrier (07).

3. The transport device as recited in claim 1 or 2, wherein the threaded spindle sleeves (08) are arranged on the spindle shaft (09) so as to be non-rotatable but longitudinally displaceable by positive locking.

4. The transport device as recited in claim 1, 2 or 3, wherein at least one spindle shaft pair (91) is provided comprising two spindle shafts (09) which are arranged offset in the transport direction (T) and on which threaded spindle sleeves (08) provided alternately transversely to the transport direction (T) in succession are arranged so as to be longitudinally displaceable and non-rotatable.

5. The transport device as recited in one of the claims 1 to 4, wherein a plurality of spindle shafts (09) arranged along the transport device (01) are operatively connected to one another by means of a transmission.

6. The transport device as recited in one of the claims 1 to 5, wherein a plurality of scissor mechanisms (10) arranged along the transport device (01) are operatively connected to one another by means of a rod linkage or a transmission.

7. The transport device as recited in one of the preceding claims, wherein at least one groove (84) is provided between the counter-rotating external thread sections (81, 82) of the threaded spindle sleeve (08).

8. The transport device as recited in one of the preceding claims, wherein the scissor mechanism (10) comprises steering arms (14) which are each pivotably connected to the control lever (12) about an own steering axis (13) extending parallel to the control lever axis (11) and are each pivotably connected to one of the lane plates (03, 05) displaceably arranged transversely to the transport direction (T) or to one of the transport track pair carriers (07) displaceably arranged transversely to the transport direction (T), the steering axes (13) of which steering arms (14) are provided on the control lever (12) all the further away from the control lever axis (11), the more lane plates (03, 05) and transport track pair carriers (07) there are between a lane plate (03, 05) or transport track pair carrier (07) articulatedly connected to a steering arm (14) assigned to a steering axis (13) and the control lever axis (11).

9. The transport device as recited in one of the preceding claims 1 to 7, wherein the scissor mechanism (10) comprises the control lever (12) pivotable about the control lever axis (11) and sliding or roller fingers arranged on the control lever (12) and engaging in sliding or roller guides formed on the lane plates (03, 05) and on the transport track pair carriers (07) extending along the transport direction (T) and longitudinally displaceable therein.

10. The transport device as recited in one of the preceding claims, wherein a middle lane plate (30) is arranged fixed to the frame and the control lever axis (11) extends through the middle lane plate (30).

11. The transport device as recited in one of the claims 1 to 9, wherein a middle transport track pair carrier (70) is arranged fixed to the frame and the control lever axis (11) extends through the middle transport track pair carrier (70).

12. The transport device as recited in one of the preceding claims, wherein the control lever (12) has two opposite lever arms (15, 16), one each for the lane plates (03, 05) and transport track pair carriers (07) arranged on each side of the control lever axis (11) seen transversely to the transport direction (T).

13. The transport device as recited in one of the preceding claims, wherein the transport devices (06) each forming a transport track are a mat conveyor or a conveyor belt with an endlessly revolving driven conveyor means.

14. The transport device as recited in one of the preceding claims, wherein an entire adjustment mechanism comprising the at least one scissor mechanism (10) and a spindle drive with the at least one spindle shaft (09) and the threaded spindle sleeves (08) interacting with the internal threads of the transport devices (06) is arranged below a transport plane formed or occupied by the transport devices (06).

15. The transport device as recited in one of the preceding claims, wherein retaining and/or dividing fingers are provided in the lane pairs (04) for setting distances between articles or groups of articles successively transported in an article stream.

16. A method for adapting a transport device (01) as recited in claim 1 to articles of different widths, the transport device (01) having at least two lane pairs (04) delimited by lane plates (03, 05) and each divisible into two individual lanes (40), each lane pair (04) having two transport tracks, each transport track formed by its own transport device (06), wherein the transport devices (06) of a lane pair (04) are arranged on a transport track pair carrier (07) provided in the center of the lane pair (04) so as to be jointly variable in opposite directions in terms of spacing, on which transport track pair carrier (07) a subdivision of the lane pair (04) into individual lanes (40) is also arranged and/or can be arranged, wherein the widths of all the individual lanes (40) or lane pairs (04) are set simultaneously, wherein the transport track pair carriers (07) which are always guided centrally within each lane pair (04) in each case are co-adjusted when the width of the individual lanes (40) or lane pairs (04) is set, and a fine adjustment of the transport devices (06), each arranged in pairs in opposite directions with variable spacing on the transport track pair carriers (07), is effected transversely to the transport direction (T) on the centers of the individual lanes (40).

17. The method as recited in claim 16, wherein for simultaneous adjustment of the widths of all individual lanes (40) or lane pairs (04) starting from an origin, all lane plates (03, 05) and transport lane pair carriers (07) remote from the origin transversely to the transport direction (T) are adjusted simultaneously and with an increasing transmission ratio transversely to the transport direction (T) as viewed with increasing distance from the origin transversely to the transport direction (T), so that each lane plate (03, 05) further remote from the origin transversely to the transport direction (T) and each transport track pair carrier (07) further remote from the origin transversely to the transport direction (T) is adjusted in each case by the sum of the differences in the initial width to the target width of all individual lanes (40) or lane pairs (04) located between the respective lane plate (03, 05) or the respective transport track pair carrier (07) and the origin.

18. The method as recited in claim 16 or 17, wherein the simultaneous fine adjustment of all transport devices (06) each arranged in pairs on the transport track pair carriers (07) so as to vary in distance in opposite directions is effected transversely to the transport direction (T) on the centers of the individual lanes (40).

19. The method as recited in claim 16, 17 or 18, wherein the subdivisions comprising for example partition plates are removed or mounted or left removed or left mounted following the fine adjustment, depending on whether the articles to be subsequently transported are so wide that they must be transported on two transport devices (06), or whether they are narrow enough to be transported in an individual lane (40).

20. The method as recited in one the claims 15 to 19, wherein a joint adjustment of the width of the individual lanes (40) or lane pairs (04) is provided with increasing transmission ratio by means of a scissor mechanism (10), and/or a joint adjustment of the transport devices (06) transversely to the transport direction (T) to the centers of the individual lanes (40) by means of threaded spindle sleeves (08) with counter-rotating thread sections (81, 82).

## Revendications

1. Dispositif de transport (01) comprenant un bâti (02) et une ou plusieurs paires de ruelles (04) parallèles les unes aux autres et délimitées les unes des autres par des tôles de ruelle intérieures (03) disposées entre elles, dans lequel:
- les paires de ruelles (04) extérieures sont délimitées vers l'extérieur par respectivement une tôle de ruelle extérieure (05),
- chaque paire de ruelles (04) comprend deux voies de transport formées chacune par un propre dispositif de transport (06),
- entre les deux dispositifs de transport (06) de chaque paires de ruelles (04) est disposé respectivement un support de paire de voies de transport (07),
- les tôles de ruelle (03, 05) et lesdits supports de paire de voies de transport (07) sont disposés sur le bâti (02) de manière à être librement déplaçables transversalement à une direction de transport (T), **caractérisé par le fait que**:
- sur chaque support de paire de voies de transport (07), au moins une douille de broche filetée (08) ayant des portions de filetage extérieur (81, 82) à sens opposé, une ouverture centrale (83) traversante et un axe de cylindre (80) s'étendant transversalement à la direction de transport (T) est agencée de manière à ne pas pouvoir coulisser le long de son axe de cylindre (80) et à être logée à rotation autour de son axe de cylindre (80),
- de part et d'autre de chaque support de paire de voies de transport (07), respectivement un dispositif de transport (06) qui est réglable par rapport à celui-ci transversalement à la direction de transport (T) et qui présente un filetage intérieur correspondant par douille de broche filetée (08) logée à rotation sur le support de paire de voies de transport (07), est disposé sur respectivement l'une des portions de filetage extérieur (81, 82) à sens opposé,
- au moins un arbre de broche (09) est disposé sur le bâti (02) de manière à être logé à rotation autour d'un axe de broche (90) s'étendant transversalement à la direction de transport (T), arbre de broche qui, en étant déplaçable longitudinalement, mais sans pouvoir tourner, traverse les ouvertures centrales (83) des douilles de broche filetée (08) dont les axes de cylindre (80) coïncident avec l'axe de broche (90), et
- au moins un mécanisme en ciseaux (10) est prévu qui comprend un levier de commande (12) lequel est disposé à pivotement autour d'un axe de levier de commande (11) solidaire du bâti et est en liaison active avec les tôles de ruelle (03, 05) et les supports de paire de voies de transport (07) disposés entre celles-ci, et qui influe sur la position de déplacement des tôles de ruelle (03, 05) et des supports de paire de voies de transport (07), transversalement à la direction de transport (T), par rapport à l'axe de levier de commande (11).

2. Dispositif de transport selon la revendication 1, dans lequel une tôle à diviser est disposée de manière amovible sur chaque support de paire de voies de transport (07).

3. Dispositif de transport selon la revendication 1 ou 2, dans lequel les douilles de broche filetée (08) sont disposées sur l'arbre de broche (09) de manière à ne pas pouvoir tourner grâce à l'engagement positif, mais à pouvoir être déplacées longitudinalement.

4. Dispositif de transport selon la revendication 1, 2 ou 3, dans lequel au moins une paire d'arbres de broche (91) est prévue, composée de deux arbres de broche (09) qui sont disposés de manière décalée dans la direction de transport (T) et sur lesquels sont disposées à coulissement longitudinal et sans pouvoir tourner des douilles de broche filetée (08) se succédant alternativement transversalement à la direction de transport (T).

5. Dispositif de transport selon l'une quelconque des revendications 1 à 4, dans lequel plusieurs arbres de broche (09) disposés le long du dispositif de transport (01) sont en liaison active les uns avec les autres au moyen d'un engrenage.

6. Dispositif de transport selon l'une quelconque des revendications 1 à 5, dans lequel plusieurs mécanismes en ciseaux (10) disposés le long du dispositif de transport (01) sont en liaison active les uns avec les autres au moyen d'une tringlerie ou d'un engrenage.

7. Dispositif de transport selon l'une quelconque des revendications précédentes, dans lequel au moins une entaille (84) est prévue entre les portions de filetage extérieur (81, 82) à sens opposé de la douille de broche filetée (08).

8. Dispositif de transport selon l'une quelconque des revendications précédentes, dans lequel le mécanisme en ciseaux (10) comprend des bras de bielle (14) qui sont reliés chacun à pivotement au levier de commande (12) autour d'un propre axe de bielle (13) s'étendant parallèlement à l'axe de levier de commande (11) et qui sont reliés de façon articulée à respectivement l'une des tôles de ruelle (03, 05) disposées à coulissement transversalement à la direction de transport (T) ou à respectivement l'un des supports de paire de voies de transport (07) disposés à coulissement transversalement à la direction de transport (T), et dont les axes de bielle (13) présente une distance par rapport à l'axe de levier de commande (11) sur le levier de commande (12) qui est plus grande, plus le nombre des tôles de ruelle (03, 05) et des supports de paire de voies de transport (07) qui sont situés entre une tôle de ruelle (03, 05) ou un support de paire de voies de transport (07) relié(e) de façon articulée à un bras de bielle (14) associé à un axe de bielle (13) et ledit axe de levier de commande (11) est important.

9. Dispositif de transport selon l'une quelconque des revendications précédentes 1 à 7, dans lequel le mécanisme en ciseaux (10) comprend le levier de commande (12) apte à pivoter autour de l'axe de levier de commande (12) ainsi que des doigts de glissement ou à rouleaux qui sont disposés sur celui-ci, s'engagent dans des glissières ou guides à rouleaux réalisés sur les tôles de ruelle (03, 05) et les supports de paire de voies de transport (07) en s'étendant le long de la direction de transport (T), et sont longitudinalement déplaçables dans ces glissières ou guides à rouleaux.

10. Dispositif de transport selon l'une quelconque des revendications précédentes, dans lequel une tôle de ruelle (30) centrale est disposée de manière solidaire du bâti et l'axe de levier de commande (11) s'étend à travers ladite tôle de ruelle (30) centrale.

11. Dispositif de transport selon l'une quelconque des revendications 1 à 9, dans lequel un support de paire de voies de transport (70) central est disposé de manière solidaire du bâti et l'axe de levier de commande (11) s'étend à travers ledit support de paire de voies de transport (70) central.

12. Dispositif de transport selon l'une quelconque des revendications précédentes, dans lequel le levier de commande (12) présente deux bras de levier (15, 16) opposés, respectivement un pour les tôles de ruelle (03, 05) et supports de paire de voies de transport (07) disposés de respectivement un côté de l'axe de levier de commande (11), vu transversalement à la direction de transport (T).

13. Dispositif de transport selon l'une quelconque des revendications précédentes, dans lequel, dans le cas desdits dispositifs de transport (06) formant respectivement une voie de transport, il s'agit d'un convoyeur à tapis ou d'une bande transporteuse ayant un moyen de transport entraîné de manière à circuler sans fin.

14. Dispositif de transport selon l'une quelconque des revendications précédentes, dans lequel un mécanisme complet d'ajustage comprenant ledit au moins un mécanisme en ciseaux (10) et une commande de broche ayant ledit au moins un arbre de broche (09) et les douilles de broche filetée (08) agissant de concert avec les filetages intérieurs des dispositifs de transport (06) est disposé au-dessous d'un plan de transport formé par les dispositifs de transport (06) ou occupés par ceux-ci.

15. Dispositif de transport selon l'une quelconque des revendications précédentes, dans lequel des doigts de retenue et/ou à diviser destinés à régler des distances entre des articles ou groupes d'articles transportés successivement dans un flux d'articles sont prévus dans les paires de ruelles (04).

16. Procédé d'adaptation, à des articles de largeur différente, d'un dispositif de transport (01) selon la revendication 1 comprenant au moins deux paires de ruelle (04) délimitées par des tôles de ruelle (03, 05) et aptes à être divisées chacune en deux ruelles individuelles (40) et ayant chacune deux voies de transport formées chacune par un propre dispositif de transport (06), dans lequel les dispositifs de transport (06) d'une paire de ruelles (04) sont disposés en commun en sens opposé et à distance variable sur un support de paire de voies de transport (07) qui est prévu au milieu de la paire de ruelles (04) et sur lequel est disposé et/ou peut être disposé un moyen à diviser la paire de ruelles (04) en ruelles individuelles (40), dans lequel les largeurs de toutes les ruelles individuelles (40) ou paires de ruelles (04) sont réglées simultanément, dans lequel lesdits supports de paire de voies de transport (07) guidés chacun toujours de manière centrale à l'intérieur de chaque paire de ruelles (04) sont réglés eux aussi lors du réglage de la largeur des ruelles individuelles (40) ou paires de ruelles (04), et un ajustage fin, transversal à la direction de transport (T), des dispositifs de transport (06) disposés respectivement par paires en sens opposé et à distance variable sur les supports de paire de voies de transport (07) se fait sur les centres des ruelles individuelles (40).

17. Procédé selon la revendication 16, dans lequel, pour le réglage simultané des largeurs de l'ensemble des ruelles individuelles (40) ou paires de ruelles (04) à partir d'une origine, l'ensemble des tôles de ruelle (03, 05) et supports de paire de voies de transport (07) espacés de l'origine transversalement à la direction de transport (T) sont réglés transversalement à la direction de transport (T) simultanément et à un rapport de transmission qui augmente avec une distance croissante de l'origine, vu transversalement à la direction de transport (T), de sorte que chaque tôle de ruelle (03, 05) espacée plus de l'origine transversalement à la direction de transport (T) et chaque support de paire de voies de transport (07) espacé plus de l'origine transversalement à la direction de transport (T) soit réglé(e) chacun(e) de la somme des différences de la largeur initiale à la largeur cible de l'ensemble des ruelles individuelles (40) ou paires de ruelles (04) situées entre la tôle de ruelle (03, 05) respective ou le support de paire de voies de transport (07) respectif et ladite origine.

18. Procédé selon la revendication 16 ou 17, dans lequel l'ajustage fin simultané, transversal à la direction de transport (T), de l'ensemble des dispositifs de transport (06) disposés respectivement par paires en sens opposé et à distance variable sur les supports de paire de voies de transport (07) se fait sur les centres des ruelles individuelles (40).

19. Procédé selon la revendication 16, 17 ou 18, dans lequel les moyens à diviser comprenant des tôles à diviser par exemple sont enlevées ou montées ou laissées enlevées ou montées suite à l'ajustage fin, selon que les articles à transporter ensuite présentent une largeur telle qu'ils doivent être transportés sur deux dispositifs de transport (06), ou qu'ils sont suffisamment étroits pour pouvoir être transportés dans une ruelle individuelle (40).

20. Procédé selon l'une quelconque des revendications 15 à 19, dans lequel on prévoit un ajustage commun de la largeur des ruelles individuelles (40) ou paires de ruelles (04) avec un rapport de transmission croissant à l'aide d'un mécanisme en ciseaux (10), et/ou un réglage commun des dispositifs de transport (06), transversal à la direction de transport (T), sur les centres des ruelles individuelles (40) à l'aide de douilles de broche filetée (08) ayant des portions filetées (81, 82) à sens opposé.
